# EUROPEAN PATENT APPLICATION

(11) **EP 4 842 086 A1**
(43) Date of publication of application: **18.11.2026**
(21) Application number: 24917187.7
(22) Date of filing: 10.01.2024
(51) Int. Cl.: H04W 52/24, H04W 16/28, H04W 52/14

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2024/000293
(87) International publication number: WO 2025/150123

(57) **Abstract**

A terminal according to one aspect of the present disclosure includes: a receiving section that receives, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point; and a control section that calculates transmission power of a UL signal to be transmitted to the UL reception point based on the PL offset value. According to one aspect of the present disclosure, UL transmission power can be appropriately controlled.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (Registered Trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 or later) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems, in order to expand the UL coverage, it has been studied to provide UL reception points in addition to general transmission/reception points. In addition, an UL dense deployment/heterogeneous network (HetNet) using a DL transmission point/macro base station (BS) and a UL reception point/micro BS, or the like has been studied.

However, when an RS for pathloss (PL) calculation (pathloss RS) is transmitted from a DL transmission point, it has not been clarified how to determine transmission power required for a terminal (user terminal, User Equipment (UE)) to transmit a UL signal to a UL reception point. When the UL transmission power cannot be appropriately controlled, there is a concern that the throughput may decrease.

Therefore, an object of the present disclosure is to provide a terminal, a radio communication method, and a base station capable of appropriately controlling UL transmission power.

### Solution to Problem

A terminal according to one aspect of the present disclosure includes: a receiving section that receives, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point; and a control section that calculates transmission power of a UL signal to be transmitted to the UL reception point based on the PL offset value.

### Advantageous Effects of Invention

According to one aspect of the present disclosure, UL transmission power can be appropriately controlled.

### Brief Description of Drawings

[FIG. 1] FIG. 1A is a diagram illustrating a deployment example of general transmission/reception points. FIG. 1B is a diagram illustrating a UL dense deployment example.
[FIG. 2] FIG. 2 is a diagram illustrating an example of DL/UL coverage of a heterogeneous network (HetNet).
[FIG. 3] FIG. 3A is a diagram illustrating an example of association between RS indices and PL values. FIG. 3B is a diagram illustrating an example of association between RS indices and delta PL values.
[FIG. 4] FIG. 4 is a diagram illustrating an example of Option 1 in a UL dense deployment.
[FIG. 5] FIG. 5 is a diagram illustrating an example of Option 2 in the UL dense deployment.
[FIG. 6] FIG. 6 is a diagram illustrating an example of power control parameters related to a TCI state.
[FIG. 7] FIG. 7 is a diagram illustrating an example of a Rel. 17 TCI-State information element.
[FIG. 8] FIGS. 8A and 8B illustrate an example of a unified/common TCI framework.
[FIG. 9] FIGS. 9A and 9B are diagrams illustrating an example of UL power control parameters in Rel. 17.
[FIG. 10] FIG. 10 is a diagram illustrating a first example of power control parameters (for example, RRC parameters) related to a TCI state of a zeroth embodiment.
[FIG. 11] FIG. 11 is a diagram illustrating a second example of the power control parameters (for example, RRC parameters) related to the TCI state of the zeroth embodiment.
[FIG. 12] FIG. 12 is a diagram illustrating a configuration example of a TCI-State information element in Option 0-2 of the zeroth embodiment.
[FIG. 13] FIG. 13 is a diagram illustrating a configuration example of a TCI-UL-State information element in Option 0-2 of the zeroth embodiment.
[FIG. 14] FIG. 14 is a diagram illustrating a configuration example of a PUSCH-PowerControl information element in Option 0-2 of the zeroth embodiment.
[FIG. 15] FIG. 15 is a diagram illustrating a third example of the power control parameters (for example, RRC parameters) related to the TCI state of the zeroth embodiment.
[FIG. 16] FIG. 16 is a diagram illustrating an example of power control parameters and the like when Scenario 1 is applied to the zeroth embodiment.
[FIG. 17] FIG. 17 is a diagram illustrating an example of power control parameters and the like when Scenario 2 is applied to the zeroth embodiment.
[FIG. 18] FIG. 18 is a diagram illustrating whether a Rel. 17 or 18 unified TCI framework supports an inter-cell scenario.
[FIG. 19] FIG. 19 is a diagram illustrating an example of an application range of an inter-cell scenario of the first embodiment.
[FIG. 20] FIG. 20 is a diagram illustrating an example of a PL offset value of Option 3-1.
[FIG. 21] FIG. 21 is a diagram illustrating an example of a fourth embodiment.
[FIG. 22] FIG. 22 is a diagram illustrating an example of a schematic configuration of a radio communication system according to one embodiment.
[FIG. 23] FIG. 23 is a diagram illustrating an example of a configuration of a base station according to one embodiment.
[FIG. 24] FIG. 24 is a diagram illustrating an example of a configuration of a user terminal according to one embodiment.
[FIG. 25] FIG. 25 is a diagram illustrating an example of a hardware configuration of the base station and the user terminal according to one embodiment.
[FIG. 26] FIG. 26 is a diagram illustrating an example of a vehicle according to one embodiment.

### Description of Embodiments

### (TCI, Spatial Relation, and QCL)

In NR, controlling reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information on a quasi-co-location (QCL) of the signal/channel and may also be referred to as a spatial Rx parameter, spatial relation information, or the like. The TCI state may be configured in the UE for each channel or each signal.

The QCL is an indicator indicating a statistical property of the signal/channel. For example, this may mean that, when a certain signal/channel and another signal/channel have a QCL relationship, it may be assumed that at least one of a Doppler shift, a Doppler spread, an average delay, a delay spread, and a spatial parameter (for example, the spatial Rx parameter) is the same (being QCL with at least one of the foregoing) between the plurality of different signals/channels.

Note that the spatial Rx parameter may correspond to a UE reception beam (for example, a reception analog beam), and the beam may be specified based on a spatial QCL. A QCL (or at least one element of the QCL) in the present disclosure may be interchangeable with a spatial QCL (sQCL).

A plurality of types of QCL (QCL types) may be defined. For example, four QCL types A to D with different parameters (or parameter sets) that can be assumed to be identical may be provided, and the corresponding parameters (which may be referred to as QCL parameters) are described as follows:
· QCL type A (QCL-A): Doppler shift, Doppler spread, average delay, and delay spread;
· QCL type B (QCL-B): Doppler shift and Doppler spread;
· QCL type C (QCL-C): Doppler shift and average delay; and
· QCL type D (QCL-D): spatial Rx parameter.

It may be referred to as a QCL assumption for the UE to assume that a certain control resource set (CORESET), channel, or reference signal has a specific QCL (for example, QCL type D) relationship with another CORESET, channel, or reference signal.

Based on a TCI state of the signal/channel or the QCL assumption, the UE may determine at least one of a transmission beam (Tx beam) and a reception beam (Rx beam) of the corresponding signal/channel.

The TCI state may be, for example, information regarding the QCL between a target channel (in other words, a reference signal (RS) for the corresponding channel) and another signal (for example, another RS). The TCI state may be configured (indicated) by higher layer signaling, physical layer signaling, or a combination thereof.

Note that, a channel/signal to which the TCI state is applied may be referred to as a target channel/reference signal (RS), simply a target, or the like, and the other signal may be referred to as a reference reference signal (reference RS), a source RS, simply a reference, or the like.

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

In addition, an RS having a QCL relationship with the channel may be, for example, at least one of a synchronization signal block (SSB), a channel state information reference signal (CSI-RS)), a sounding reference signal (SRS), a tracking CSI-RS (also referred to as a tracking reference signal (TRS)), a QCL detection reference signal (also referred to as a QRS), a demodulation reference signal (DMRS), or the like.

The SSB is a signal block including at least one of a primary synchronization signal (PSS), a secondary synchronization signal (SSS), and a broadcast channel (physical broadcast channel (PBCH)). The SSB may be called an SS/PBCH block.

An RS of QCL type X in a TCI state may mean an RS in a QCL type X relationship with (DMRS of) a certain channel/signal, and this RS may be called a QCL source of the QCL type X in the corresponding TCI state.

### (Scenario 1: UL Dense Deployment (UL only TRP))

In Rel. 15 NR, coverages (reach distances) of PUSCH, PUCCH, PRACH, PDSCH, PDCCH, and PBCH are not uniform. Especially at high frequencies, the coverage of the PUSCH is limited. In a future radio communication system (for example, Rel. 18, Rel. 19, or later), improvement of at least one of UL coverage and UL throughput has been studied.

In order to expand the UL coverage, it has been studied to provide UL reception points in addition to general transmission/reception points. Therefore, a deployment example of general transmission/reception points and a deployment example (UL dense deployment) in which UL reception points are provided will be described.

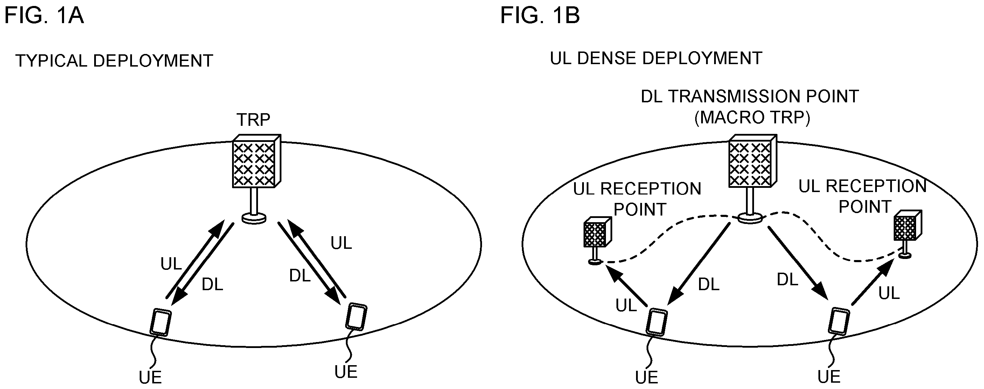

FIG. 1A is a diagram illustrating a deployment example of general transmission/reception points. In FIG. 1A, a UE receives a DL signal from a transmission/reception point (TRP) and transmits a UL signal to the TRP. For example, when the UE and the TRP are far from each other, there is a concern that a pathloss is large and the communication quality deteriorates.

FIG. 1B is a diagram illustrating a UL dense deployment example. In order to expand the UL coverage, it has been studied to provide the UL reception points illustrated in FIG. 1B in addition to the DL transmission point illustrated in FIG. 1A. In FIG. 1B, the UE receives DL signals from a DL transmission point (TRP/central TRP/DL TRP/macro TRP) corresponding to the macro cell and transmits UL signals to a UL reception point (for example, a reception point with lower pathloss/received power). However, the UE may also perform UL transmission to the DL transmission point.

By using the UL dense deployment illustrated in FIG. 1B, both coverage and a UL data rate can be improved by reducing a pathloss, improving UL signaling quality, and obtaining a higher coding rate compared with the typical deployment illustrated in FIG. 1A. Furthermore, since the UL reception point mainly performs reception, a required function (for example, a power amplifier or the like) is reduced and cost is reduced as compared with a transmission/reception point corresponding to a general small cell, and deployment management becomes very easy.

### (Scenario 2: Decoupling of DL TRP and UL TRP in HetNet)

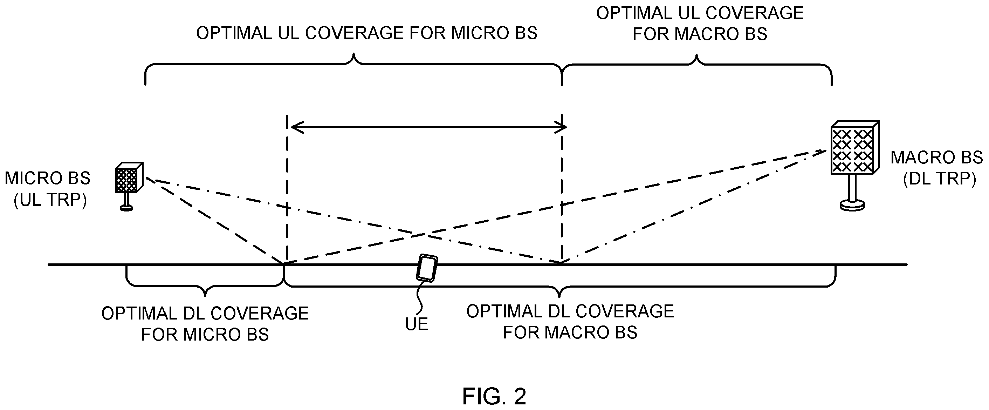

In the present disclosure, a heterogeneous network (HetNet) using a macro base station (BS) (DL TRP) and a micro BS (UL TRP) may be applied (FIG. 2). In a normal HetNet, transmission powers of a macro BS and a micro BS are different. Furthermore, the optimal DL coverage and the optimal UL coverage are different. For example, DL coverage is determined by RSRP, and UL coverage is determined by pathloss (PL).

In the example of FIG. 2, the UE is included in the optimal DL coverage for the macro BS and the optimal UL coverage for the micro BS. In this case, the UE can receive the DL from the macro BS and transmit the UL to the micro BS. However, the UE may transmit some reference signals/channels (for example, SRS that is used to acquire DL CSI and with usage of antenna switching (AS)) to the macro BS. Accordingly, the UE may require two timing advances (TAs) in this scenario. Note that since the base station (macro BS) performs the CSI measurement for the DL (for example, determines the MIMO precoder for the DL) based on the reception of the SRS using the reciprocity of the channel, the SRS of the AS is transmitted to the macro BS. On the other hand, the SRS with usage of Codebook/Non-codebook is used for determining the precoder/beam of the PUSCH, and thus is transmitted to the micro BS.

In the HetNet, even if the micro BS has the DL transmission capability, the energy of the micro BS can be saved by turning off the DL most of the time. In this case, the function of the micro BS is similar to the UL only TRP (UL reception point).

### (Reception of pathloss (PL))

The UE may receive, with the DL signaling, first information indicating a pathloss (PL) used for transmission power control (TPC) estimated and notified (transmitted) by a network. The DL signaling may be at least one of higher layer signaling (for example, RRC or MAC CE) and physical layer signaling (for example, downlink control information (DCI)).

Using the received pathloss (PL_{b,f,c}(q_{d}), PL_{b,f,c}) (pathloss for an active UL BWP b of a carrier f of a serving cell c using an index q_{d}), the UE may calculate UL signal transmission power (for example, transmission power of a PUSCH/PUCCH/SRS/PRACH) for a reception point to which downlink data is not transmitted.

[Option 1] An absolute pathloss (PL) value [dB] for each RS index may be notified (transmitted) from the network to the UE. The UE may directly use the notified absolute pathloss value for calculation of transmission power.

[Option 2] A relative pathloss (delta PL) value [dB] for each RS index may be notified (transmitted) from the network to the UE. The UE may use, for calculation of the transmission power, a pathloss value obtained by applying (adding or subtracting) a received delta PL value to (or from) a conventional pathloss value estimated from the DL RS transmitted from the macro cell (the macro BS/central TRP).

The PL value/delta PL value in Options 1 and 2 may be notified/configured for each index of q_{d}/SSB/CSI-RS/SRS resource/SRS resource set. One or a plurality of RS indices and PL values/delta PL values corresponding to the RS indices may be notified by DL signaling. The PL values/delta PL values may be interchangeable with PL parameters/delta PL parameters.

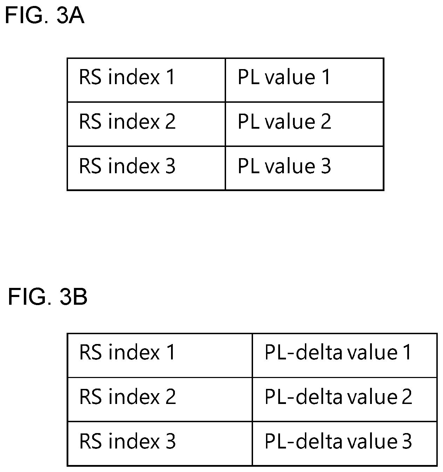

FIG. 3A is a diagram illustrating an example of association between RS indices and PL values. FIG. 3B is a diagram illustrating an example of association between RS indices and delta PL values. The association (correspondence) between the RS indices and the PL values/delta PL values is not limited to FIGS. 3A and 3B. For example, one RS index may correspond to a plurality of PL values/delta PL values. Note that a quantization table (range and step) of the PL values/delta PL values may be defined in advance in the specifications. The PL values/delta PL values to be notified may be quantized values or indices of the quantized values.

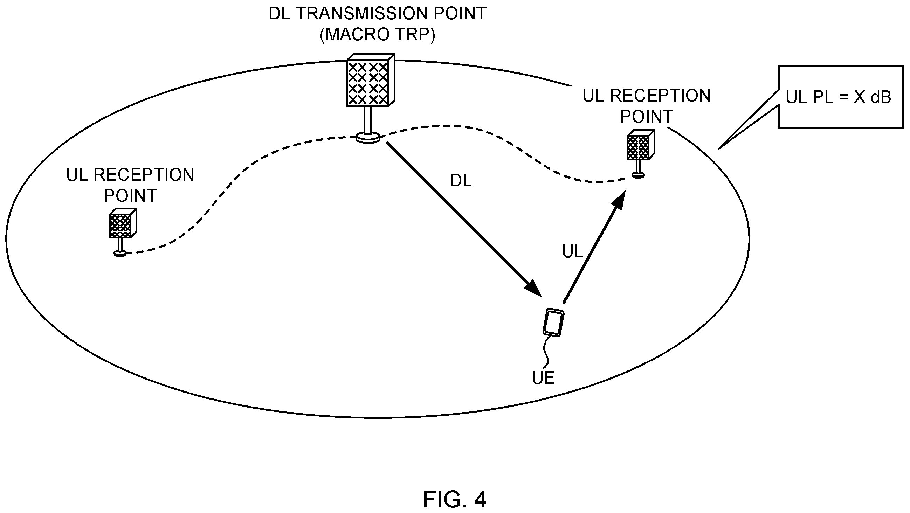

FIG. 4 is a diagram illustrating an example of Option 1 in the UL dense deployment. The UL reception point receives /measures a UL signal. When the transmission power of the UL signal is known to the DL transmission point (macro TRP/gNB), the DL transmission point can determine the accurate PL value of the UL reception point. In this case, the DL transmission point can notify the UE of the absolute PL value (X [dB]) of the UL reception point.

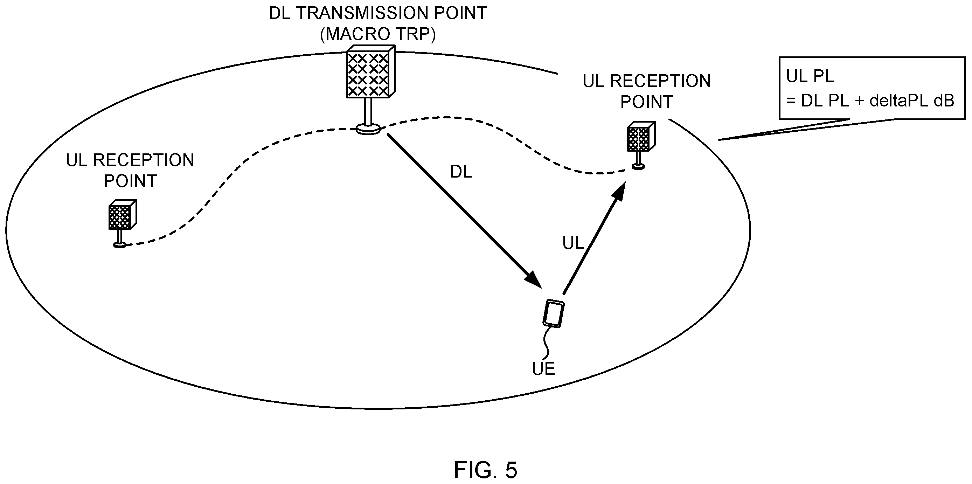

FIG. 5 is a diagram illustrating an example of Option 2 in the UL dense deployment. When both the DL transmission point (macro TRP/gNB) and the UL reception point measure the same resource, the DL transmission point can recognize a difference between a PL between the DL transmission point and the UE and a PL between the UL reception point and the UE. In this case, the DL transmission point may notify the UE of the difference (relative PL/delta PL). The relative PL/delta PL may be referred to as a PL offset.

As described above, even if the DL RS (RS index) used for pathloss estimation is not notified, the UE can calculate the transmission power by using the notified PL values/delta PL values.

### (TCI, Spatial Relation, and QCL)

In NR, controlling reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information on a quasi-co-location (QCL) of the signal/channel and may also be referred to as a spatial Rx parameter, spatial relation information, or the like. The TCI state may be configured in the UE for each channel or each signal.

The QCL is an indicator indicating a statistical property of the signal/channel. For example, this may mean that, when a certain signal/channel and another signal/channel have a QCL relationship, it may be assumed that at least one of a Doppler shift, a Doppler spread, an average delay, a delay spread, and a spatial parameter (for example, the spatial Rx parameter) is the same (being QCL with at least one of the foregoing) between the plurality of different signals/channels.

Note that the spatial Rx parameter may correspond to a UE reception beam (for example, a reception analog beam), and the beam may be specified based on a spatial QCL. A QCL (or at least one element of the QCL) in the present disclosure may be interchangeable with a spatial QCL (sQCL).

A plurality of types of QCL (QCL types) may be defined. For example, four QCL types A to D with different parameters (or parameter sets) that can be assumed to be identical may be provided.

It may be referred to as a QCL assumption for the UE to assume that a certain control resource set (CORESET), channel, or reference signal has a specific QCL (for example, QCL type D) relationship with another CORESET, channel, or reference signal.

Based on a TCI state of the signal/channel or the QCL assumption, the UE may determine at least one of a transmission beam (Tx beam) and a reception beam (Rx beam) of the corresponding signal/channel.

The TCI state may be, for example, information regarding the QCL between a target channel (in other words, a reference signal (RS) for the corresponding channel) and another signal (for example, another RS). The TCI state may be configured (indicated) by higher layer signaling, physical layer signaling, or a combination thereof.

The physical layer signaling may be, for example, Downlink Control Information (DCI).

A channel for which a TCI state or a spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

Furthermore, an RS having a QCL relationship with the channel may be, for example, at least one of a synchronization signal block (SSB), a channel state information reference signal (CSI-RS), a measurement reference signal (sounding reference signal (SRS)), a tracking CSI-RS (also called a tracking reference signal (TRS)), and a QCL detection reference signal (also called a QRS).

The SSB is a signal block including at least one of a primary synchronization signal (PSS), a secondary synchronization signal (SSS), and a broadcast channel (physical broadcast channel (PBCH)). The SSB may be called an SS/PBCH block.

An RS of QCL type X in a TCI state may mean an RS in a QCL type X relationship with (DMRS of) a certain channel/signal, and this RS may be called a QCL source of the QCL type X in the corresponding TCI state.

### (UL Power Control Parameters for TCI State)

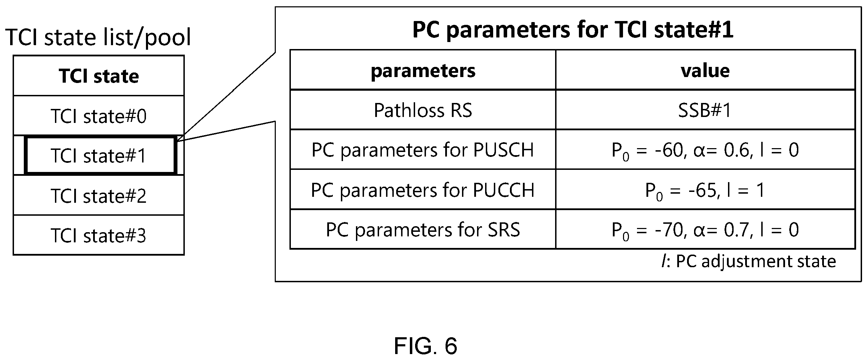

FIG. 6 is a diagram illustrating an example of power control parameters related to a TCI state. As illustrated in FIG. 6, respective power control parameters of a pathloss RS and a PUSCH/PUCCH/SRS are associated with a TCI state.

When a Rel. 17 TCI state is configured, a Rel. 15/16 TCI state and spatial relation information (excluding positioning) cannot be configured in the same band. For a channel/RS to which the indicated TCI state is not applied, the Rel. 17 TCI state may be configured instead of the Rel. 15/16 TCI state and the spatial relation information.

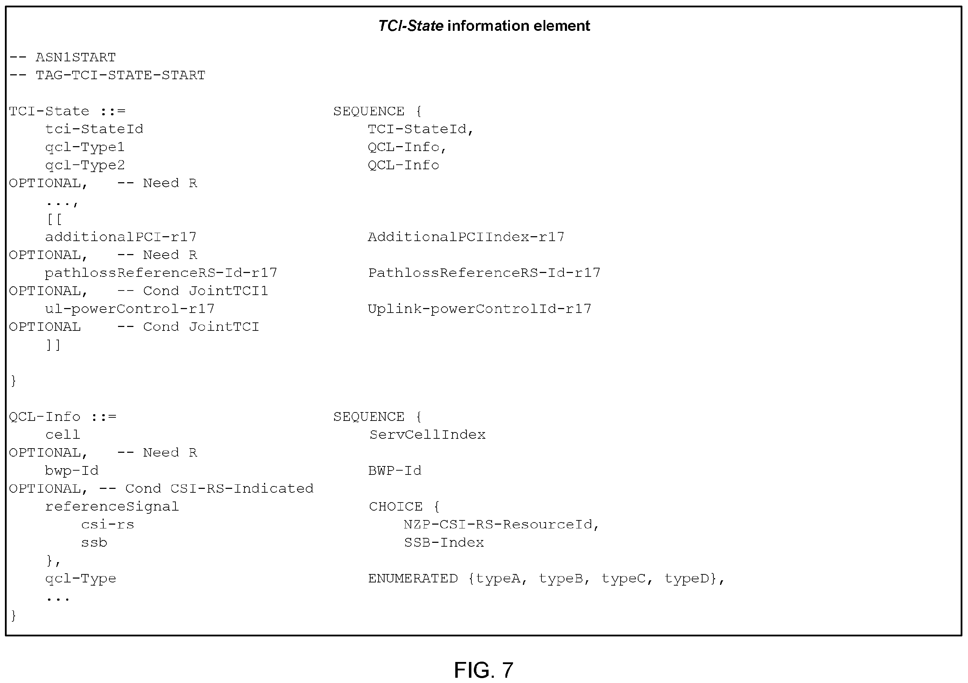

The UE may transmit UE capability information indicating that different power control parameters are associated with each TCI state. When the UE does not support this UE capability, a default power control parameter may be used. FIG. 7 is a diagram illustrating an example of a Rel. 17 TCI-State information element. The default power control parameter is, for example, the pathloss reference RS-ID (pathlossReferenceRS-Id-r17) of FIG. 7.

### (Unified/Common TCI Framework)

According to the unified TCI framework, multiple types (UL/DL) of channels/RSs can be controlled by a common framework. The unified TCI framework may indicate the common beam (common TCI state) and apply the indicated common beam to all UL and DL channels, or apply the common beam for UL to all UL channels and apply the common beam for DL to all DL channels, instead of defining the TCI state or spatial relation for each channel as in Rel. 15.

One common beam for both DL and UL, or the common beam for DL and the common beam for UL (two common beams in total) has been studied.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool, and DL common TCI pool) for each of UL and DL.

The UL and DL default beams may be aligned by beam management based on MAC CE (MAC CE level beam indication). The default TCI state of the PDSCH may be updated to match a default UL beam (spatial relation).

Beam management based on the DCI (DCI level beam indication) may indicate the common beam/unified TCI state from the same TCI pool (joint common TCI pool, joint TCI pool, set) for both UL and DL. X (> 1) TCI states may be activated by the MAC CE. The UL/DL DCI may select one from the X active TCI states. The selected TCI state may be applied to the channels/RSs of both UL and DL.

The TCI pool (set) may be a plurality of TCI states configured by an RRC parameter, or may be a plurality of TCI states (active TCI state, active TCI pool, set) activated by the MAC CE among the plurality of TCI states configured by the RRC parameter. Each TCI state may be a QCL type A/D RS. The SSB, the CSI-RS, or the SRS may be configured as the QCL type A/D RS.

The number of TCI states corresponding to each of one or more TRPs may be defined. For example, the number N (≥ 1) of TCI states (UL TCI states) applied to the UL channel/RS and the number M (≥ 1) of TCI states (DL TCI states) applied to the DL channel/RS may be defined. At least one of N and M may be notified/configured/indicated to the UE via higher layer signaling/physical layer signaling.

In the present disclosure, when N = M = X (X is any integer) is described, it may mean that X TCI states (joint TCI states) (corresponding to X TRPs) common to the UL and the DL are notified/configured/indicated to the UE. In addition, when N=X (X is any integer) and M=Y (Y may be any integer, and Y may be X) are described, it may mean that X UL TCI states (corresponding to X TRPs) and Y DL TCI states (corresponding to Y TRPs) (that is, separate TCI states) are respectively notified/configured/indicated to the UE.

For example, when N = M = 1 is described, it may mean that one TCI state common to the UL and the DL for a single TRP is notified/configured/indicated to the UE (joint TCI state for a single TRP).

In addition, for example, when N = 1 and M = 1 is described, it may mean that one UL TCI state and one DL TCI state for a single TRP are separately notified/configured/indicated to the UE (separate TCI state for a single TRP).

In addition, for example, when N = M = 2 is described, it may mean that a plurality of (two) TCI states common to the UL and the DL for a plurality of (two) TRPs are notified/configured/indicated to the UE (joint TCI states for multi-TRP).

In addition, for example, when N = 2 and M = 2 are described, it may mean that a plurality of (two) UL TCI states and a plurality of (two) DL TCI states for a plurality of (two) TRPs are notified/configured/indicated to the UE (separate TCI states for multi-TRP).

Note that, in the above example, the case where the values of N and M are 1 or 2 has been described, but the values of N and M may be 3 or more, and N and M may be different.

It has been studied that N = M = 1 is supported in Rel. 17. It has been studied that other cases are supported in and after Rel. 18.

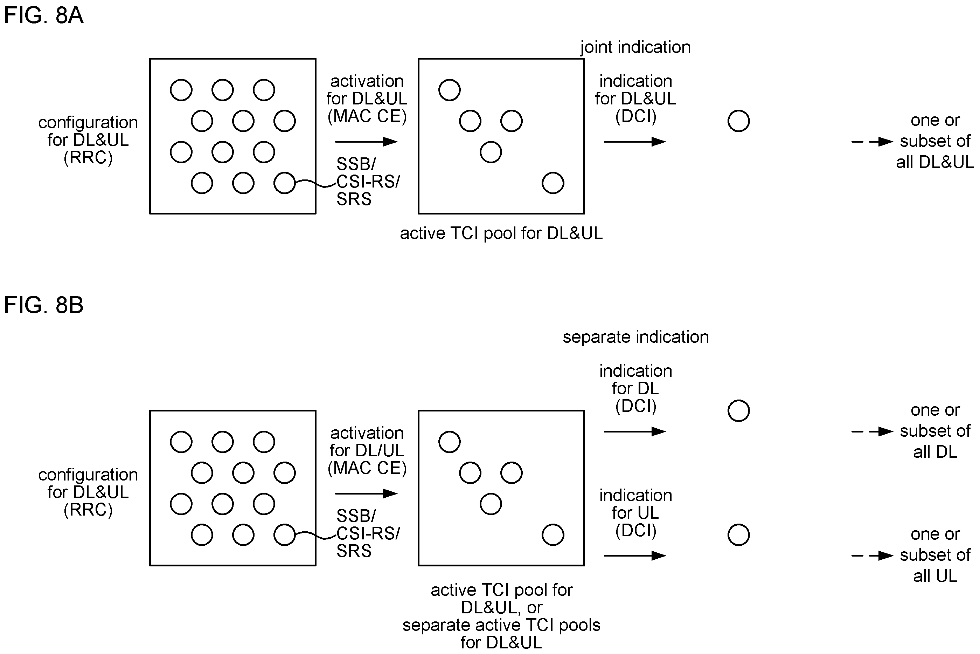

In the example of FIG. 8A, the RRC parameter (information element) configures a plurality of TCI states for both DL and UL. The MAC CE may activate a plurality of TCI states among the configured plurality of TCI states. The DCI may indicate one of the plurality of TCI states activated. The DCI may be UL/DL DCI. The indicated TCI state may be applied to at least one (or all) of the UL/DL channels/RSs. One piece of DCI may indicate both UL TCI and DL TCI.

In the example of this drawing, one point may be one TCI state applied to both UL and DL, or two TCI states applied to UL and DL, respectively.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) for configuring the plurality of TCI states may be referred to as configuration information for configuring the plurality of TCI states, and may be simply referred to as "configuration information". In addition, in the present disclosure, the indication of one of the plurality of TCI states by using the DCI may mean receiving indication information indicating one of the plurality of TCI states included in the DCI, or may mean simply receiving "indication information".

In the example of FIG. 8B, the RRC parameter configures a plurality of TCI states for both DL and UL (joint common TCI pool). The MAC CE may activate a plurality of TCI states (active TCI pool) among the plurality of configured TCI states. Active TCI pools (separate) for UL and DL may be configured/activated.

DL DCI or a new DCI format may select (indicate) one or more (for example, one) TCI states. The selected TCI state may be applied to one or more (or all) DL channels/RSs. The DL channel may be PDCCH/PDSCH/CSI-RS. The UE may determine the TCI state of each channel/RS of the DL using the operation of the TCI state in Rel. 16 (TCI framework). UL DCI or a new DCI format may select (indicate) one or more (for example, one) TCI states. The selected TCI state may be applied to one or more (or all) UL channels/RSs. The UL channel may be PUSCH/SRS/PUCCH. In this way, different pieces of DCI may separately indicate UL TCI and DL DCI.

In Rel. 17 NR or later, it is assumed that the MAC CE/DCI supports the activation/indication of beams to TCI states associated with different physical cell identifiers (PCIs). In addition, in Rel. 18 NR or later, it is assumed that an indication to change the serving cell to a cell having a different PCI is supported by MAC CE/DCI.

### [Channel/RS to which Indicated TCI State is Applied in Rel. 17]

The indicated TCI state indicated by the MAC CE/DCI may be applied to the following channels/RSs.

### [PDCCH]

· If followUnifiedTCIState (following a unified TCI state) is configured for CORESET 0, the indicated TCI state is applied. Otherwise, the Rel. 15 specification is applied to the CORESET. That is, CORESET 0 follows the TCI state activated by the MAC CE or is QCLed with the SSB.
· The indicated TCI state is always applied to a CORESET with USS/CSS Type 3 and with an index other than 0.
· The indicated TCI state is applied if it is configured to follow the unified TCI state for a CORESET with at least a CSS other than CSS type 3 and with an index other than 0. Otherwise, the configured TCI state ("configured TCI state") for the CORESET is applied to the CORESET.

### [PDSCH]

· The indicated TCI state is always applied to all UE-dedicated PDSCHs.
· If followUnifiedTCIState is configured for a CORESET of a non-UE-dedicated PDSCH (a PDSCH scheduled by the DCI in the CSS) (for the CORESET of the PDCCH scheduling the PDSCH), the indicated TCI state may be applied. Otherwise, the configured TCI state for the PDSCH is applied to the PDSCH. When followUnifiedTCIState is not configured for the PDSCH, whether the non-UE-dedicated PDSCH follows the indicated TCI state may be determined according to whether the followUnifiedTCIState is configured for the CORESET used for scheduling the PDSCH.

### [CSI-RS]

· The indicated TCI state is applied when followUnifiedTCIState is configured for the A-CSI-RS for CSI acquisition or beam management (for the CORESET of the PDCCH that triggers the A-CSI-RS). The configured TCI state ("configured TCI state") for the CSI-RS is applied to other CSI-RSs.

### [PUCCH]

· The indicated TCI state is always applied to all dedicated PUCCH resources.

### [PUSCH]

· The indicated TCI state is always applied to a dynamic/configured grant PUSCH.

### [SRS]

· The indicated TCI state is applied when it is configured to follow the unified TCI state for the SRS resource set for an A-SRS for beam management application and an A/SP/P-SRS for codebook (CB)/non-codebook (NCB)/antenna switching application. For other SRSs, the configured TCI state within the SRS resource set is applied.

### [Channel/RS to which Indicated TCI State is Applied in Rel. 18]

When single-DCI multi-TRP is applied, the indicated TCI state may be applied to the following channels/RSs. Note that applyIndicatedTCIState={1st,2nd,both} in the following description is a parameter indicating that a first TCI state, a second TCI state, or both the first TCI state and the second TCI state are applied.

### [PDCCH]

· For CORESET 0, followUnifiedTCIState (following the unified TCI state) is configured, and applyIndicatedTCIState={1st,2nd,both} is configured to indicate that the indicated TCI state is applied. Otherwise, the Rel. 15 specification is applied to the CORESET. That is, CORESET 0 follows the TCI state activated by the MAC CE or is QCLed with the SSB.
· For a CORESET with USS/CSS Type 3 and with an index other than 0, applyIndicatedTCIState={1st,2nd,both} is configured for each CORESET to indicate that the indicated TCI state is applied.
· For a CORESET with at least a CSS other than CSS Type 3 and with an index other than 0, when it is configured to follow the unified TCI state, applyIndicatedTCIState={1st,2nd,both} is configured for each CORESET to indicate that the indicated TCI state is applied. Otherwise, the configured TCI state ("configured TCI state") for the CORESET is applied to the CORESET.

### [PDSCH]

· One or both of the indicated TCI states are always applied to all UE-dedicated PDSCHs.
· In the case of a PDSCH scheduled/activated by DCI 1_1/1_2, a 2-bit TCI state selection field of the DCI 1_1/1_2 can indicate {1st,2nd,both}. When the TCI state selection field is not configured, both the indicated TCI states are applied.
· In the case of a PDSCH scheduled/activated by DCI 1_0, {1st,2nd,both} is configured via RRC.
· "both" can be configured only when PDSCH-CJT or PDSCH-SFN is configured.

### [CSI-RS]

· When followUnifiedTCIState is configured for an A-CSI-RS for CSI acquisition or beam management (for the CORESET of the PDCCH that triggers the A-CSI-RS), applyIndicatedTCIState={1st,2nd,both} is configured for each CSI-RS resource or CSI-RS resource set to indicate that the indicated TCI state is applied. The configured TCI state ("configured TCI state") for the CSI-RS resource is applied to other CSI-RSs.

### [PUCCH]

· applyIndicatedTCIState={1st,2nd,both} is configured for each PUCCH resource/PUCCH resource group.

### [PUSCH]

· The indicated TCI state is always applied to a dynamic/configured grant PUSCH.
· The first indicated TCI state is always applied to the PUSCH scheduled/activated by DCI 0_0.
· In the case of Type 1 CG PUSCH, applyIndicatedTCIState={1st,2nd,both} is configured.
· An SRS resource set indication field indicates one/both SRS resource sets to be used.

### [SRS]

· When it is configured to follow the unified TCI state for an SRS resource set for an A-SRS with usage of beam management or for an A/SP/P-SRS with usage of codebook (CB)/non-codebook (NCB)/antenna switching, applyIndicatedTCIState={1st,2nd,both} is configured for each SRS resource set to indicate that the indicated TCI state is applied. For other SRSs, the configured TCI state within the SRS resource set is applied.

In the present disclosure, the indicated TCI state, the unified TCI state, the TCI state applied to the channel/signal that is configured to follow the unified TCI state, the TCI state applied to the UE-dedicated PDSCH and the CORESET/PDCCH associated with the USS, and the TCI state applied to the PUCCH and the PUSCH may be interchangeable with each other.

### (UL Power Control Parameters of Unified TCI State in Rel. 17)

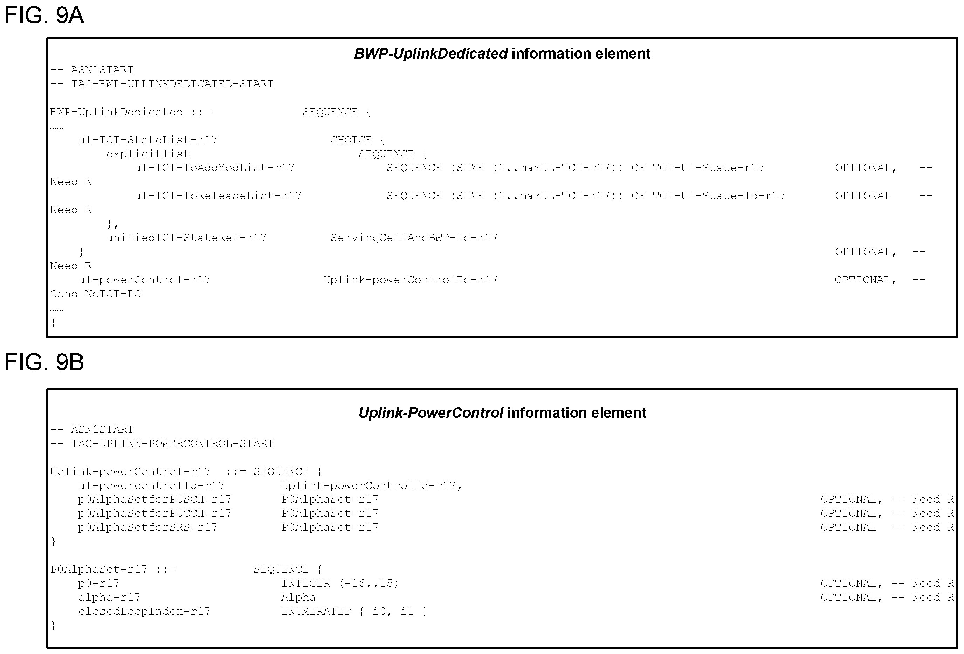

In the unified TCI state in Rel. 17, the UE is provided with UL power control parameters (RRC information element "ul-powerControl-r17") included in a UE-specific UL BWP configuration (RRC information element "BWP-UplinkDedicated") (refer to FIG. 9A). When UL power control (ul-powerControl) for the UL TCI state/joint TCI state of the serving cell is not configured for the UE, the parameter is used for transmission power control of UL transmission.

The UL power control parameters (RRC information element "ul-powerControl-r17") correspond to a UL power control parameter ID (Uplink-powerControlId-r17), and the UL power control parameters are identified by the ID.

The UL power control parameters (RRC information element "uplink-powerControl-r17") corresponding to "ul-powerControl-r17" include at least one of a set (p0AlphaSetforPUSCH-r17) of P0 and α for PUSCH, a set (p0AlphaSetforPUCCH-r17) of P0 and α for PUCCH, and a set (p0AlphaSetforSRS-r17) of P0 and α for SRS, and are used for transmission power control of each channel/signal (refer to FIG. 9B).

In addition, in the Rel. 17 unified TCI framework, RRC/MAC CE/DCI indicates one joint TCI or one set of {DL TCI, UL TCI} (separate TCI). The indicated TCI is applied to a plurality of UL/DL channels/RSs.

### (Unified TCI State for Multi-TRP in Rel. 18)

In Rel. 18, the specifications of the unified TCI for multi-TRP are extended. For example, in the case of single-DCI multi-TRP, the UE may be indicated with up to two joint TCIs or up to two sets of {DL TCI, UL TCI} via the RRC/MAC CE/DCI. In the case of multi-DCI multi-TRP, the UE may be indicated with one joint TCI or one set of {DL TCI, UL TCI} via the RRC/MAC CE/DCI for each coresetPoolIndex. The indicated TCI is applied to a plurality of UL/DL channels/RSs. The association of the first and second indicated TCIs with each UL/DL channel/RS may be predefined in the specifications, may be configured by RRC signaling, or may be indicated by DCI.

### (Timing Advance)

The timing advance (TA) is used for timing adjustment of the UL. Up to the existing specification (Rel. 17), the UL frame number i for transmission from the UE starts a certain time (for example, T_{TA}) before the start of the corresponding DL frame.

The certain time may be, for example, T_{TA} = (N_{TA} + N_{TA,offset} + N^{common}_{TA,adj} + N^{UE}_{TA, adj})T_{C}. When being used in non-terrestrial network (NTN), N^{common}_{TA,adj} and N^{UE}_{TA, adj} may be zero regardless of the examples of the present disclosure.

Here, N_{TA} may indicate a timing advance between DL and UL, N_{TA,offset} may indicate a fixed offset used to calculate the timing advance, N^{common}_{TA,adj} may indicate a network-controlled timing correction, N^{UE}_{TA, adj} may indicate a UE-derived timing correction, and T_{C} may indicate a basic time unit for NR.

For example, in the random access preamble transmission and the message A PUSCH transmission, N_{TA} is zero, and N_{TA,offset} is applied.

### (Timing Advance Group)

When a plurality of TRPs is used, distances between the UE and the respective TRPs may be different from each other. The plurality of TRPs may be included in the same cell (for example, the serving cell). Alternatively, among the plurality of TRPs, a certain TRP may correspond to a serving cell and another TRP may correspond to a non-serving cell. The plurality of TRPs may include DL transmission points and UL reception points. In this case, it is also assumed that the distance between each TRP and the UE is different.

In the existing system, a transmission timing of an uplink (UL) channel and/or a UL signal (UL channel/signal) is adjusted by timing advance (TA). The reception timing of UL channels/signals from different user terminals (UE) is adjusted on a radio base station (also referred to as TRP: Transmission and Reception Point, gNB: gNodeB, and the like) side.

The UE may perform timing control of the UL transmission by applying the timing advance (multiple timing advance) for each preset timing advance group (TAG).

When multiple timing advances are applied, a timing advance group (TAG) classified by transmission timing is supported. The UE may control the UL transmission timing in each TAG assuming that the same TA offset (or TA value) is applied for each TAG. That is, the TA offset may be configured independently for each TAG.

When multiple timing advances are applied, the UE independently adjusts the transmission timing of the cells belonging to each TAG, so that the uplink signal reception timing from the UE can be matched in the radio base station even when a plurality of cells is used.

The TAG (for example, serving cells that belong to the same TAG) may be configured via a higher layer parameter. The same timing advance value may be applied to serving cells (for example, serving cells in which the UL is configured) that belong to the same TAG. The timing advance group including the SpCell of the MAC entity is referred to as a primary timing advance group (PTAG), and the other TAGs may be referred to as secondary timing advance groups (STAGs). Furthermore, the maximum number of TAGs may be X (for example, X = 4) for each cell group (for example, MCG/SCG).

### (Analysis)

As described above, in order to expand the UL coverage, it has been studied to provide UL reception points in addition to general transmission/reception points. In addition, an UL dense deployment/heterogeneous network (HetNet) using a DL transmission point/macro base station (BS) and a UL reception point/micro BS, or the like has been studied.

However, when an RS for pathloss (PL) calculation (pathloss RS) is transmitted from a DL transmission point, it has not been clarified how to determine transmission power required for a terminal to perform UL transmission to a UL reception point. When the UL transmission power cannot be appropriately controlled, there is a concern that the throughput may decrease.

Therefore, the present inventors have conceived a method capable of appropriately controlling UL transmission power.

Hereinafter, embodiments according to the present disclosure will be described in detail with reference to the drawings. The radio communication method according to each embodiment may be applied independently, or may be applied in combination with others.

### (Various Replacements)

In the present disclosure, the wording surrounded by "()" in the text may represent an explanation (for example, spelling explanation), paraphrases, specific examples, supplementary explanations, and the like for the immediately preceding wording. In addition, in the present disclosure, as for the wording surrounded by "[]" in the text, the meaning of the entire text may be interpreted including this, or may be interpreted without this (by ignoring this). Note that "()" and "[]" may be used for other purposes/meanings.

In the present disclosure, "A/B" and "at least one of A and B" may be interchangeable with each other. Furthermore, in the present disclosure, "A/B/C" may mean "at least one of A, B, and C".

In the present disclosure, notification, activate, deactivate, indicate, select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, a higher layer parameter, a field, an information element (IE), a configuration, and the like may be interchangeable with each other. In the present disclosure, a Medium Access Control control element (MAC control element (CE)), an update command, an activation/deactivation command, and the like may be interchangeable with each other.

In the present disclosure, the higher layer signaling may be, for example, any one of Radio Resource Control (RRC) signaling, Medium Access Control (MAC) signaling, broadcast information, other messages (a message from the core network, such as, for example, a positioning protocol (for example, NR Positioning Protocol A (NRPPa)/LTE Positioning Protocol (LPP)) message), or the like, or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, do not transmit, and the like may be interchangeable with each other.

In the present disclosure, a panel, a UE panel, a panel group, a beam, a beam group, a precoder, an uplink (UL) transmission entity, a transmission and reception point (transmission/reception point (TRP)), a base station, spatial relation information (SRI), a spatial relation, an SRS resource indicator (SRI), a control resource set (CORESET), a physical downlink shared channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a physical uplink control channel (PUCCH) group, or a PUCCH resource group), a resource (for example, a reference signal resource and an SRS resource), a resource set (for example, a reference signal resource set), a CORESET pool, a downlink transmission configuration indication state (TCI state) (DL TCI state), an uplink TCI state (UL TCI state), a unified TCI state, a common TCI state, a quasi-co-location (QCL), QCL assumption, and the like may be interchangeable with each other.

In the present disclosure, the single TRP, a channel/signal using the single TRP, a channel using one TCI state/spatial relation, the fact that the multi-TRPs are not enabled by the RRC/DCI, the fact that a plurality of TCI states/spatial relations are not enabled by the RRC/DCI, and the fact that a CORESET pool index (CORESETPoolIndex) value of 1 is not configured for any CORESET and no codepoint in the TCI field is mapped to two TCI states may be interchangeable with each other.

In the present disclosure, the multi-TRPs, a channel/signal using the multi-TRPs, a channel using the plurality of TCI states/spatial relations, the fact that the multi-TRPs are enabled by the RRC/DCI, the fact that the plurality of TCI states/spatial relations are enabled by the RRC/DCI, and at least one of the single-DCI-based multi-TRPs and the multi-DCI-based multi-TRPs may be interchangeable with each other.

In the present disclosure, the single DCI (sDCI), the single PDCCH, the single-DCI-based multi-TRP system, the sDCI-based MTRP, and the two TCI states being activated on at least one TCI codepoint may be interchangeable with each other.

In the present disclosure, the multi-DCI (mDCI), the multi-PDCCHs, the multi-DCI-based multi-TRP system, the mDCI-based MTRP, and two CORESET pool indices or CORESET pool index = 1 (or a value of 1 or more) being configured may be interchangeable with each other.

In the present disclosure, a cell, a PCI, a serving cell, a source serving cell, a source cell, a CC, a BWP, a BWP in a CC, and a band may be interchangeable with each other. In the present disclosure, a cell, a PCI, a cell with an additional PCI, an additional cell, another cell, a non-serving cell, a cell with a different PCI, a candidate cell, a candidate serving cell, a cell with a PCI different from a PCI of the current serving cell, another serving cell, a target cell, a neighboring cell, and an inter-RAT neighboring cell may be interchangeable with each other. The target cell may be a cell selected from a plurality of candidate cells. In the present disclosure, switching, changing, and updating may be interchangeable with each other. The serving cell may be interchangeable with a serving cell before switching or a serving cell after switching.

The UL reception point may be connected to a TRP (for example, a base station) or a core network via wire or radio. The UL reception point may be treated as a network (NW) or a base station. The UL reception point may be capable of transmitting downlink (DL) signals (for example, PL values) and may be applied to a base station forming a macro cell. For example, the UL reception point may not transmit downlink data but may transmit control signals/channels.

In the present disclosure, the base station, the TRP, the UL reception point, the UL TRP, the UL only TRP (UL only TRP), the micro cell, the micro BS, and the micro TRP may be interchangeable with each other. The UL reception point mainly performs UL reception. The UL reception point may perform only UL reception or may perform UL reception and DL transmission.

In the present disclosure, the base station, the TRP, the DL transmission point, the DL TRP, the DL only TRP (DL only TRP), the UL/DL TRP, the macro cell, the macro BS, the macro TRP, and the central TRP may be interchangeable with each other. The DL transmission point mainly performs DL transmission. The DL transmission point may perform only DL transmission or may perform UL reception and DL transmission.

In the present disclosure, UL dense deployment, a distributed TRP mode, a separated location mode of transmission/reception points, a distributed transmission/reception mode, a separated TRP mode, TRP Type 1, TRP Type 2, TRP Type A, and TRP Type B may be interchangeable with each other.

The present disclosure may be based on at least one of a single TRP, a multi-DCI multi-TRP, a single-DCI multi-TRP, or Scenario 1 or Scenario 2 described above.

In the present disclosure, being configured and receiving a configuration (configuration information) may be interchangeable with each other.

In the present disclosure, a TCI, a TCI state, a TCI state ID, a TCI state list/set/pool/group, and a TCI state list/set/pool/group ID may be interchangeable with each other.

In the present disclosure, one set of TCI states (separate TCI states) may mean a set of a UL TCI state and a DL TCI state. A TCI state may mean a TCI-State information element that is an RRC information element.

In the present disclosure, an indicated TCI state, a unified TCI state, a unified TCI state for which multi-TRP is not configured/used/applied, a unified TCI state defined in Rel. 17, a Rel. 17 unified TCI state, and a first unified TCI state may be interchangeable with each other.

In the present disclosure, an indicated TCI state, a unified TCI state, a unified TCI state for which multi-TRP is configured/used/applied, a unified TCI state for which multi-TRP may be configured/used/applied, an indicated TCI state for which multi-TRP is configured/used/applied, an indicated TCI state for which multi-TRP may be configured/used/applied, a unified TCI state defined in Rel. 18, a Rel. 18 unified TCI state, a unified TCI state for multi-TRP, and a second unified TCI state may be interchangeable with each other.

In the present disclosure, a TCI state indicated by the DCI, an indicated TCI state, an indicated TCI state, a unified TCI state, a TCI state applied to multiple types of channels/signals, a joint TCI state (for DL and UL), a DL TCI state, a UL TCI state, a Rel. 17 TCI state, a common TCI state, a single unified TCI state to be configured, and a single unified TCI state to be activated may be interchangeable with each other.

In the present disclosure, a TCI state configured by the RRC parameter, a configured TCI state, a configured TCI state, a TCI state not following a unified TCI state, a TCI state other than a unified TCI state, a TCI state/spatial relation configured for a specific channel/signal, and an individual TCI state may be interchangeable with each other.

The unified/common TCI state may mean an indicated TCI state indicated by using DCI/MAC CE/RRC (In Rel. 17).

The indicated TCI state may be shared with at least one of UE-specific reception on the PDSCH/PDCCH (updated by using Rel. 17 DCI/MAC CE/RRC), a PUSCH of a dynamic grant (DCI)/configured grant, and a plurality of (for example, all) dedicated PUCCH resources. The TCI state indicated by the DCI/MAC CE/RRC may be referred to as an indicated TCI state.

When the indicated TCI state is supported (In Rel. 17), a TCI state other than the unified TCI state may mean a TCI state (configured TCI state) configured by using MAC CE/RRC (In Rel. 17).

The configured TCI state need not be shared with at least one of UE-specific reception on the PDSCH/PDCCH (updated by using Rel. 17 DCI/MAC CE/RRC), the PUSCH of the dynamic grant (DCI)/configured grant, and a plurality of (for example, all) dedicated PUCCH resources. The configured TCI state may be configured in the RRC/MAC CE for each CORESET/for each resource/for each resource set, and the configured TCI state may not be updated even if the above-described indicated TCI state is updated.

In the present disclosure, a first TRP may correspond to the first TCI state. In the present disclosure, a second TRP may correspond to the second TCI state. In the present disclosure, a n-th TRP may correspond to a n-th TCI state.

In the present disclosure, a first CORESET pool index value (for example, 0), a first TRP index value (for example, 1), and a first TCI state (first DL/UL (joint/separate) TCI state) may correspond to each other. In the present disclosure, a second CORESET pool index value (for example, 1), a second TRP index value (for example, 2), and a second TCI state (second DL/UL (joint/separate) TCI state) may correspond to each other.

In the present disclosure, TA, TAG, and TA offset values may be interchangeable with each other. The DL reference timing and the DL reception timing may be interchangeable with each other. The two TA/TAGs may be interchangeable with more than two TA/TAGs.

In the present disclosure, an absolute PL, a pathloss (PL), a PL value, and a PL parameter may be interchangeable with each other. In the present disclosure, a relative PL, a delta PL, a PL offset, a P_{O} offset, an α offset, a power/power density [x dBm] offset, a pathloss (PL), a PL value, and a PL parameter may be interchangeable with each other. In the present disclosure, PL, PL value, PL RS, and PL RSID may be interchangeable with each other.

In the present disclosure, using a relative PL (PL offset) value may mean that a PL value obtained by applying (adding or subtracting) a received (configured) relative PL (PL offset) value to (or from) a PL value estimated based on a DL RS transmitted from a macro TRP is used for calculation of transmission power of a UL signal to be transmitted to a UL reception point.

### (Radio Communication Method)

### <Zeroth Embodiment>

A case where UL power control parameters are configured (or not configured) for a UL TCI state or a joint TCI state of a serving cell will be described. The UE may receive a configuration of a first pathloss value corresponding to a UL reception point (UL TRP) or a configuration of a PL offset (relative PL) value that is a difference between a second pathloss value corresponding to a DL transmission point (DL TRP) and the first pathloss value, and may calculate transmission power of the UL signal to be transmitted to the UL reception point based on the first pathloss value or the PL offset value.

Whether the PL value or the PL offset (relative PL) value is configured is determined/configured for each TCI state ID. In addition, the PL value or the relative PL (delta PL/PL offset) value may be determined/configured for each TCI state ID. Hereinafter, the UL TCI state/joint TCI state may be simply described as a TCI state.

In the Rel. 17 unified TCI state, in order to indicate a TPC parameter (excluding PL RS), an RRC parameter (Uplink-powerControlId-r17) indicating UL power control is configured for the UE for each TCI state or UL TCI state. The UE may be additionally configured with information indicating the PL value or the relative PL (delta PL) value as an optional field of the TCI state (or the UL TCI state) or Uplink-powerControlId-r17.

When the additional information indicating the PL value or the relative PL value is not configured for the TCI state or the UL TCI state (the RRC parameter TCI-State or the RRC parameter TCI-UL-State-r17), the UE may determine that the TCI state is associated with the macro TRP (DL transmission point).

When the additional information indicating the PL value or the relative PL value is configured for the TCI state or the UL TCI state (the parameter TCI-State or the parameter TCI-UL-State-r17), the UE may determine that the TCI state is associated with the UL reception point.

The TCI state (RRC parameter TCI-State), the UL TCI state (RRC parameter TCI-UL-State-r17), and the RRC parameter (Uplink-powerControlId-r17) indicating the UL power control related to the TCI state may be interchangeable with each other.

### [Option 0-1]

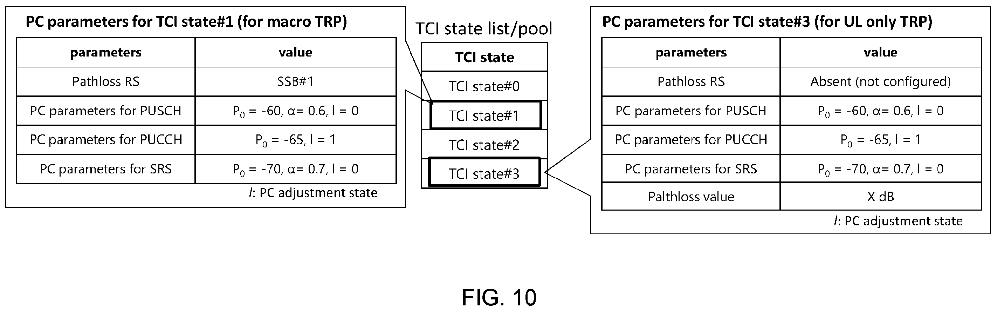

FIG. 10 is a diagram illustrating a first example of power control parameters (for example, RRC parameters) related to a TCI state of a zeroth embodiment. As illustrated in FIG. 7, the configuration of the TCI state includes a parameter (pathlossReferenceRS-Id-r17) indicating the pathloss RS and a UL power control parameter (ul-powerControl-r17). As illustrated in FIG. 9B, Uplink-powerControlId-r17 corresponding to ul-powerControl-r17 has parameters indicating P₀ and α for PUSCH, PUCCH, and for SRS (p0AlphaSetforPUSCH-r17, p0AlphaSetforPUCCH-r17, and p0AlphaSetforSRS-r17), and the like.

In the example illustrated in FIG. 10, the parameters for the macro TRP (TCI state #1) have only these conventional RRC parameters, but the parameters for the UL reception point (TCI state #3) further has the pathloss value (PL value). For the TCI state #3, the pathloss RS is not configured, and the PL value is configured. Therefore, the UE can determine the UL transmission power by using the PL value as it is even when the pathloss RS is not configured.

The UE/base station may determine that the TCI state corresponds to the UL reception point based on at least either the fact that the parameters related to the TCI state do not include the pathloss RS or the fact that the parameters related to the TCI state include the PL value. The UE/base station may determine that the TCI state corresponds to the macro TRP based on at least either the fact that the parameters related to the TCI state include the pathloss RS or the fact that the parameters related to the TCI state do not include the PL value.

### [Option 0-2]

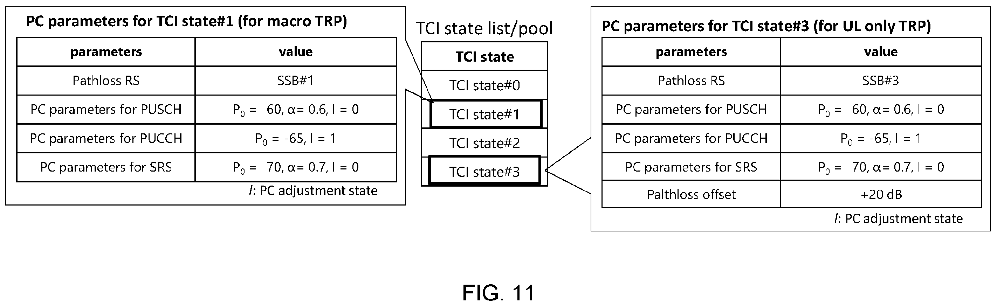

FIG. 11 is a diagram illustrating a second example of the power control parameters (for example, RRC parameters) related to the TCI state of the zeroth embodiment. The example illustrated in FIG. 11 is different from the example of FIG. 10, in that for TCI state #3, the pathloss RS is configured and the relative PL (PL offset) is configured instead of the PL value.

In the example of FIG. 11, the UE may use, for calculation of the transmission power, a PL value obtained by applying (adding or subtracting) a received relative PL (PL offset) value to (or from) a PL value estimated from a DL RS transmitted from a macro TRP.

The UE/base station may determine that the TCI state corresponds to the UL reception point based on at least either the fact that the parameters related to the TCI state include the pathloss RS or the fact that the parameters related to the TCI state include the relative PL (PL offset). The UE/base station may determine that the TCI state corresponds to the macro TRP based on at least either the fact that the parameters related to the TCI state do not include the pathloss RS or the fact that the parameters related to the TCI state do not include the relative PL (PL offset).

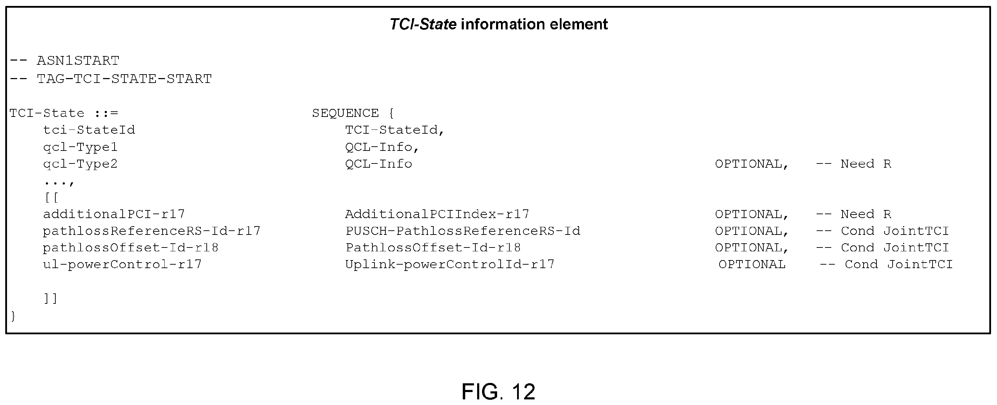

FIG. 12 is a diagram illustrating a configuration example of a TCI-State information element in Option 0-2 of the zeroth embodiment. As illustrated in FIG. 12, identification information (pathlossOffset-Id-r18) indicating the PL offset value may be included in the TCI-State information element.

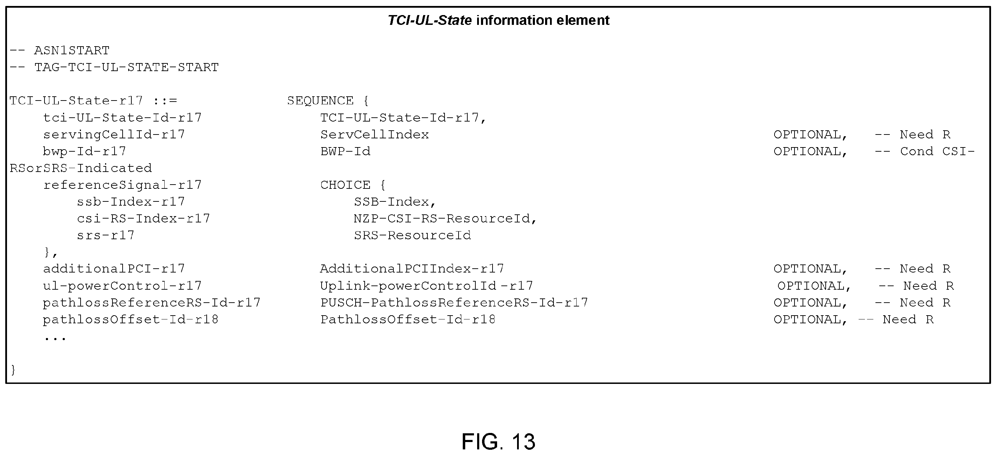

FIG. 13 is a diagram illustrating a configuration example of a TCI-UL-State information element in Option 0-2 of the zeroth embodiment. As illustrated in FIG. 13, identification information (pathlossOffset-Id-r18) indicating the PL offset value may be included in the TCI-UL-State information element.

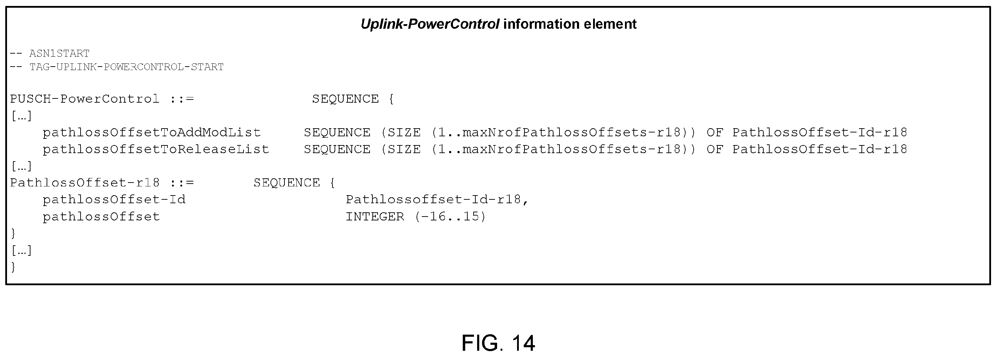

FIG. 14 is a diagram illustrating a configuration example of a PUSCH-PowerControl information element in Option 0-2 of the zeroth embodiment. As illustrated in FIG. 14, in the PUSCH-PowerControl information element, lists (pathlossOffsetToAddModList, pathlossOffsetToReleaseList) including a plurality of parameters (pathlossOffset-Id-r18) indicating PL offset values may be configured. maxNrofPathlossOffsets-r18 indicates the number (maximum number) of UL reception points, that is, the number (maximum number) of PL offset values. For example, 2 or 4 is configured. In addition, as the PL offset value (pathlossOffset) corresponding to pathlossOffset-Id-r18, any value between -16 and 15 is configured. Note that the values of maxNrofPathlossOffsets-r18 and pathlossOffset are not limited to the example illustrated in FIG. 14.

### [Option 0-3]

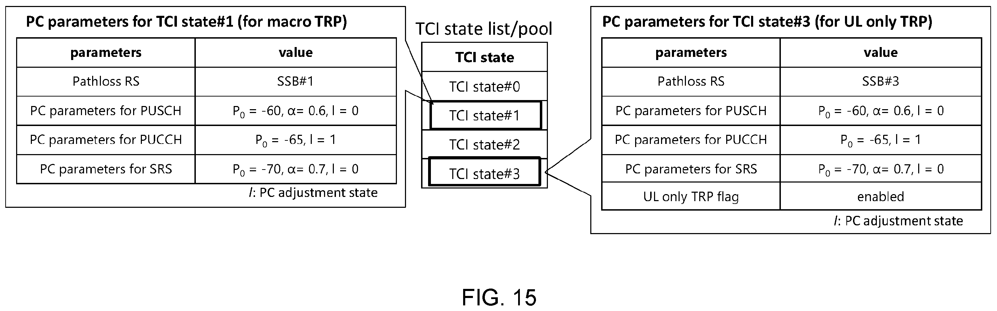

FIG. 15 is a diagram illustrating a third example of the power control parameters (for example, RRC parameters) related to the TCI state of the zeroth embodiment. The UE may receive information (a flag or the like) indicating a UL reception point as a parameter corresponding to the TCI state of the UL reception point. In the example illustrated in FIG. 15, as a parameter corresponding to the UL reception point (TCI state #3), an explicit indication (UL only TRP flag) of a UL reception point (UL only TRP) is configured.

When the parameter related to the TCI state includes an explicit indication of a UL reception point, the UE may determine that the TCI state corresponds to the UL reception point, and when the parameter related to the TCI state does not include an explicit indication of a UL reception point, the UE may determine that the TCI state corresponds to a macro TRP.

The example of FIG. 15 may be combined with the examples of FIG. 10 and 11. For example, the explicit indication of the UL reception point (UL only TRP) may be added as a parameter for the UL reception point (TCI state #3) of FIGS. 10 and 11.

### <<Variations>>

As a parameter for a macro TRP (TCI state #1), an explicit indication of the macro TRP may be included. When an explicit indication of a macro TRP is included, the UE may determine that the TCI state corresponds to the macro TRP, and when an explicit indication of a macro TRP is not included, the UE may determine that the TCI state corresponds to the UL reception point.

In addition, different TCI states may be configurable for a UL reception point or a macro TRP. The UE may switch between a UL reception point and a macro TRP via an RRC/MAC CE/DCI-based TCI state indication.

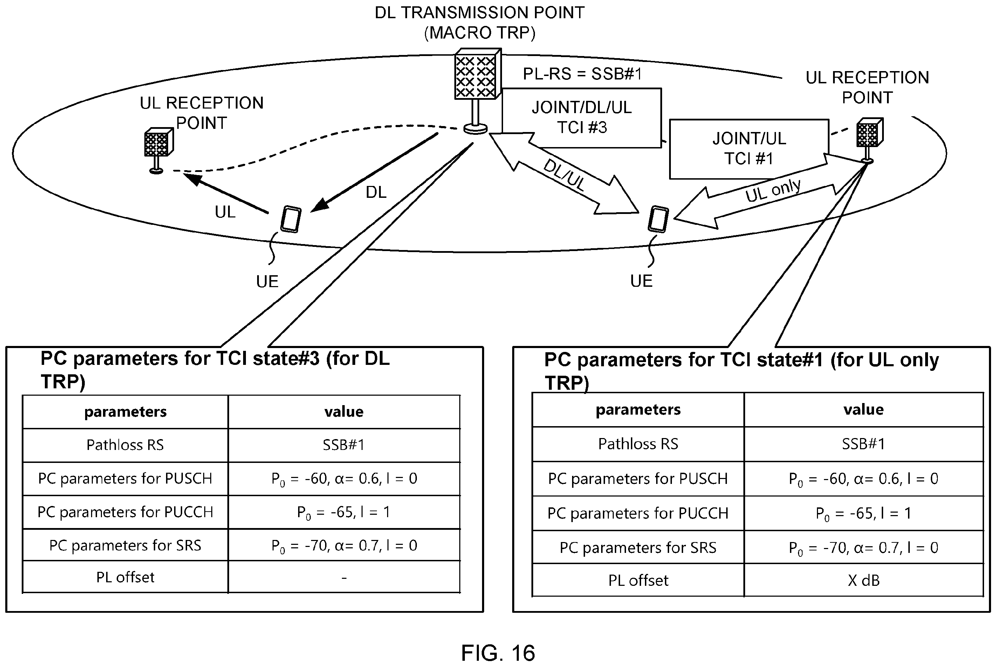

FIG. 16 is a diagram illustrating an example of power control parameters and the like when Scenario 1 is applied to the zeroth embodiment. In Scenario 1, a PL-RS (pathloss reference signal) is transmitted from a DL transmission point to the UE, but a PL-RS is not transmitted from a UL reception point to the UE. Therefore, as a pathloss used for transmission power calculation when a UL signal is transmitted to a UL reception point, the UE uses a value obtained by adding a PL offset (X dB) to a pathloss based on the PL-RS (SSB #1) from the DL transmission point.

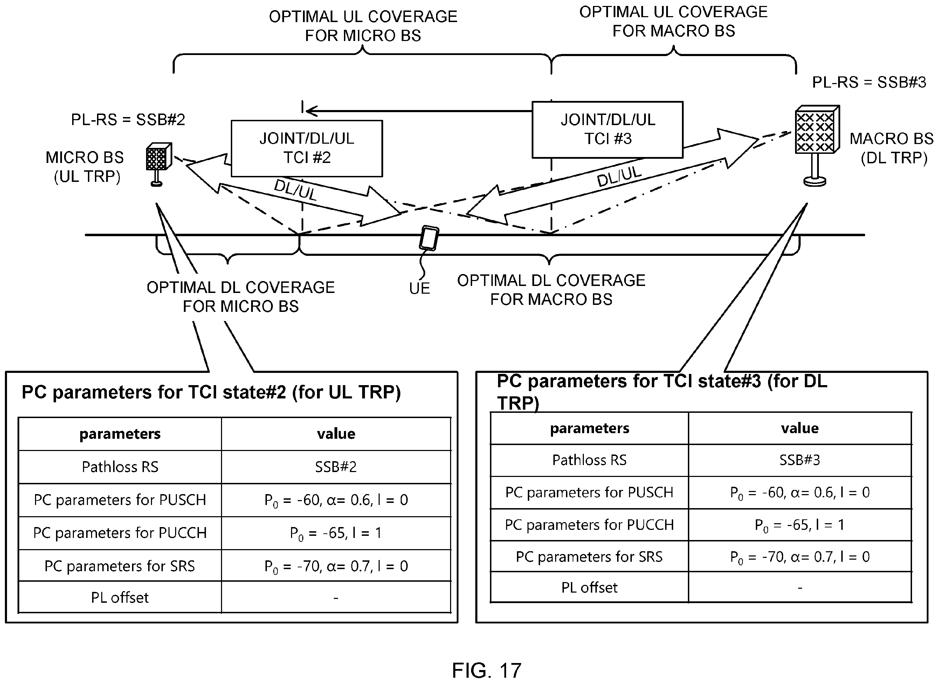

FIG. 17 is a diagram illustrating an example of power control parameters and the like when Scenario 2 is applied to the zeroth embodiment. In Scenario 2, separate PL-RSs (SSB #3 and SSB #2) are transmitted from a DL TRP and a UL TRP to the UE. As a pathloss when a UL signal is transmitted to a UL TRP, the UE uses the pathloss based on the PL-RS from the UL TRP as it is, and thus does not need to be configured with a PL offset.

When the PL offset is configured for each TCI state, it may mean that the TCI state is associated with the UL reception point/UL TRP (the UE may determine that the TCI state is associated with the UL reception point/UL TRP). In this case, the UE calculates the PL based on the PL offset value. Different TCI states (different UL reception points/UL TRPs) may be configured with different PL offsets (a set of PL offsets). The maximum number of different PL offset values (a set of the values) may be configured/indicated in advance (for example, maxNrofPathlossOffsets-r18=2 or 4).

Note that the UL channel/RS related to the TCI state may require the PL calculation based on the PL offset. The DL channel/RS related to the TCI state may not require the PL calculation based on the PL offset.

The PL offset may be configured for each TCI state. A specific value of the PL offset may be configured/defined in advance for the UL reception point. When the PL offset corresponding to the TCI state is a specific value, the TCI state is associated with the UL reception point; otherwise, the TCI state may be associated with the macro TRP (DL/UL TRP). For example, when the PL offset corresponding to the TCI state is not zero, it may mean that the TCI state is associated with the UL reception point, and otherwise, that the TCI state is associated with the macro TRP (DL/UL TRP).

When the PL offset is not configured for each TCI state, it may mean that the TCI state is associated with the DL transmission point (DL/UL TRP) (the UE may determine that the TCI state is associated with the DL transmission point (DL/UL TRP)). In this case, the UE may calculate the PL based on the PL-RS without using the PL offset value. The macro TRP (DL/UL TRP) or the UL TRP of Scenario 2 can transmit a PL-RS, and thus does not need to be configured with a PL offset.

Alternatively, the macro TRP (DL/UL TRP) or the UL TRP of Scenario 2 may be configured with a PL offset. As a result, the TRP can reduce PL-RS transmission to reduce energy consumption.

Variation: In the TCI state for which the PL offset is configured, whether the PL offset is applied depends on a certain condition. The condition may be, for example, any of the following.
· The TCI state is an indicated TCI or a configured TCI.
· A DCI format or search space that schedules the PDSCH is a specific DCI format or search space (for example, a common search space (CSS) or a UE-specific search space (USS)).
· The TCI state ID/UL TCI state ID (tci-StateId/tci-UL-State-Id-r17) is a specific value (a value in a specific range).
· The pathloss RS is a specific RS (an RS having a specific ID).

In the Rel. 18 unified TCI framework, the PL offset may be configured only for a single-DCI multi-TRP. This is because Scenario 2 is supported in the Rel. 17 unified TCI framework for a single TRP.

According to the zeroth embodiment, the UE can easily determine whether the TCI state corresponds to a UL reception point or a macro TRP. In addition, by using the PL offset, the UE can appropriately determine a pathloss for a UL reception point from which a PL-RS is not transmitted.

### <Application of Intra-Cell/Inter-Cell Scenarios>

Assuming an asymmetric DL single TRP/UL multi TRP scenario, without changing an existing cell definition or defining a new cell (for example, a UL-only cell) corresponding to a UL reception point, functional enhancement that assumes a non-QCL multi-TRP scenario (intra-cell/inter-cell scenario) in an intra-band and in a distributed unit (DU) may be defined. This may be a function that assumes the Rel. 17/18 unified TCI framework, reuses the conventional QCL/UL spatial relation rules, and targets FR1 and FR2.

For example, two closed-loop power control (PC) adjustment states for SRS may be configured (both are configured separately from the PUSCH). In addition, when the pathloss RS is transmitted from the DL single TRP, a PL offset for pathloss calculation for one or a plurality of UL TRPs may be configured.

### <First Embodiment>

It has been studied to support intra-DU scenarios (both intra-cell/inter-cell scenarios between a DL TRP and a UL TRP). Hereinafter, the application of the unified TCI frame to the intra-cell/inter-cell scenarios will be described. Note that the release numbers such as Rel. 17 and Rel. 18 in the present disclosure are examples, and the present disclosure is not limited thereto.

Scenario 1 (UL dense deployment) and Scenario 2 (HetNet) may be applied within a cell, or may be supported between cells (a plurality of cells). For example, both the DL transmission point and the UL reception point of Scenario 1 or both the macro BS (DL TRP) and the micro BS (UL TRP) of Scenario 2 may be within one cell (for example, a serving cell) (intra-cell scenario). For example, the DL transmission point of Scenario 1 and the macro BS (DL TRP) of Scenario 2 may correspond to a first cell (for example, a serving cell), and the UL reception point of Scenario 1 and the micro BS (UL TRP) of Scenario 2 may correspond to a second cell (for example, a non-serving cell) (inter-cell scenario). Scenario 1 or Scenario 2 applied within a cell may be referred to as the intra-cell scenario. Scenario 1 or Scenario 2 applied between cells may be referred to as the inter-cell scenario.

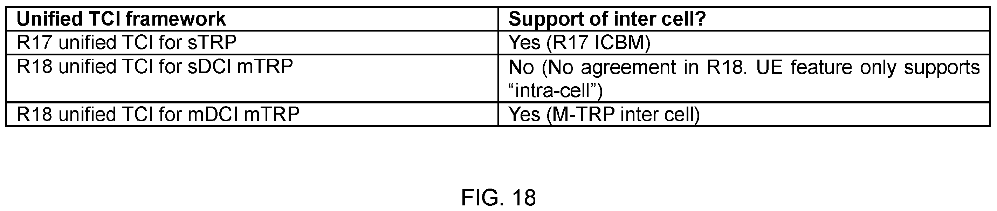

FIG. 18 is a diagram illustrating whether the Rel. 17 or 18 unified TCI framework supports the inter-cell scenario. Note that R17 and R18 respectively denote Rel. 17 and Rel. 18, but the release numbers are not limited thereto. As illustrated in FIG. 18, the unified TCI for a single TRP may support the inter-cell scenario (Inter cell beam management (ICBM) of Rel. 17). The unified TCI for a single-DCI multi-TRP does not need to support the inter-cell scenario. The unified TCI for a multi-DCI multi-TRP may support the inter-cell scenario (inter-cell scenario for a multi-TRP).

In order to support the inter-cell scenario, any of the following options may be applied (supported).

### <<Option 1>>

The unified TCI for a Rel. 18 single-DCI multi-TRP (that is, two sets of indicated TCIs for DL and UL).

### <<Option 2>>

The unified TCI (ICBM) for a Rel. 17 single TRP (that is, one set of indicated TCIs for DL and UL). In this case, the single TRP needs to be supported, but the specification changes are smaller than those of Option 1.

Both the unified TCI for a Rel. 17 single TRP and the unified TCI for a Rel. 18 single-DCI multi-TRP may be supported for a UL reception point/UL TRP.

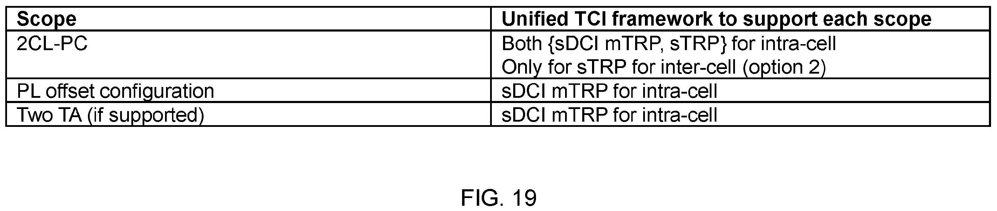

FIG. 19 is a diagram illustrating an example of an application range of the inter-cell scenario of the first embodiment. For example, two closed-loop power control (PC) (2CL-PC) states may be applied to both the single-DCI multi-TRP and the single TRP corresponding to the inter-cell scenario. Alternatively, the 2CL-PC may be applied only to a single TRP corresponding to the inter-cell scenario. The configuration of the PL offset may be applied to a single-DCI multi-TRP corresponding to the inter-cell scenario. Two TAs (if supported) may be applied to a single-DCI multi-TRP corresponding to the inter-cell scenario.

### <Second Embodiment>

The UE may receive a configuration of a PL offset value that is a difference between a first pathloss value corresponding to a UL reception point and a second pathloss value corresponding to a DL transmission point, and may calculate transmission power of a UL signal to be transmitted to the UL reception point based on the PL offset value. The PL offset may be configured for each TCI state, for each set of TCI states, or for all TCI states.

The UE may calculate the PL value of the UL TRP based on the received PL offset. For example, the UE may use, for calculation of the transmission power of the UL signal to be transmitted to the UL TRP, a PL value obtained by applying (adding or subtracting) the received PL offset value to (or from) a PL value estimated from a DL RS transmitted from a macro TRP (DL TRP).

Hereinafter, application examples of the PL offset will be described. Note that the TCI state in the present disclosure may be interchangeable with a TRP (UL TRP/UL reception point) corresponding to the TCI state. Applying the PL offset to a TRP corresponding to the TCI state may mean calculating the transmission power of the UL signal to be transmitted to the TRP using the PL offset.

### <<2-1>>

The UE may be capable of applying the PL offset to only a TRP corresponding to a joint TCI/UL TCI state (that is, the PL offset cannot be applied to a DL TCI).

### <<2-2>>

The UE may be capable of applying the PL offset to only a TRP corresponding to a joint/UL TCI state according to the indicated TCI (that is, the PL offset is not applied to the configured TCI state). This is because the UL TRP is mainly used for a UE-specific channel/RS.

When the PL offset is applied for each TCI state, the UE does not need to expect that the PL offset is configured for a TCI state that does not follow the indicated TCI. When the PL offset is applied for each set of TCI states/for all TCI states and when the TCI state does not follow the indicated TCI, the UE may ignore the PL offset.

### <<2-3>>

The UE may be capable of applying the PL offset only to calculation of transmission power of a dynamic grant (DG) PUSCH. Alternatively, the UE may be capable of applying the PL offset to both a DG PUSCH and a configured grant (CG) PUSCH. The UE may be capable of applying the PL offset to Message 3 or A PUSCH. Alternatively, the UE does not need to be capable of applying the PL offset to Message 3 or A PUSCH.

Whether the PL offset is applied to a specific channel or purpose may be configured/indicated via higher layer signaling/physical layer signaling, or may be reported via UE capability information.

### <<2-4>>

The UE may be capable of applying the PL offset to at least one of the following.
· A single TRP PUCCH, a multi-TRP PUCCH with repetition (Rel. 17), a single-DCI simultaneous transmission multi-panel (STxMP) PUCCH single frequency network (SFN) (Rel. 18), and a multi-DCI simultaneous transmission multi-panel (STxMP) PUCCH (Rel. 18).
· A single TRP PUSCH, a multi-TRP PUSCH with repetition (Rel. 17), a single-DCI simultaneous transmission multi-panel (STxMP) PUSCH Space Division Multiplexing (SDM)/SFN (Rel. 18), and a multi-DCI simultaneous transmission multi-panel (STxMP) PUSCH (Rel. 18).
· Only a PUSCH with fewer than four transmissions (four antenna ports). Alternatively, a PUSCH with fewer than four transmissions and a PUSCH with six transmissions /eight transmissions (six antenna ports/eight antenna ports).

### <<2-5>>

The UE may be capable of applying the PL offset to either the first TCI state or the second TCI state. That is, the configuration of the PL offset may be configurable for either the first TCI state or the second TCI state.

When two TCI states are indicated, one of the TCI states is associated with the macro TRP. That is, in the example of FIG. 16, it is not allowed that both of the two indicated TCI states correspond to the UL reception point. Even when both of the two indicated TCI states are configured for the UL reception point, the UE may ignore the configuration.

The PL offset may be configured only for either of the indicated TCI states (the first/second indicated TCI state). Alternatively, the PL offset may be configurable for either the first indicated TCI state or the second indicated TCI state.

According to the present embodiment, since the application of the PL offset to the TCI state, the channel, and the like is clear, the UE can appropriately apply the PL offset to the TCI state, the channel, and the like.

### <Third Embodiment>

The UE may be configured with the PL offset for the PRACH. The UE may calculate the transmission power of the PRACH using the configured PL offset. For example, the UE may use, for calculation of the transmission power of the UL signal to be transmitted to the UL TRP, a PL value obtained by applying (adding or subtracting) the received PL offset value to (or from) a PL value estimated from a DL RS transmitted from a macro TRP (DL TRP). When two TAs in a single DCI are supported, the PL offset for the PRACH may be supported (configured).

### <<3-1>>

When the PL offset for the PRACH is not supported/configured in the UE, (or when the PRACH is triggered by a method other than a PDCCH order, or when a PRACH association indicator field in the PDCCH order is 0), the UE may transmit the PRACH to the macro TRP/DL transmission point (DL/UL TRP). In this case, the UE performs transmission and reception with the macro TRP (DL/UL TRP) in a RACH procedure.

Accordingly, even in an RRC connected mode, the PL offset is not applied to at least one of a PUSCH scheduled by a RAR UL grant and a Message 4 HARQ-ACK PUCCH. The indicated TCI is not applied to these PUSCHs/PUCCHs. Therefore, when 2-2 above is applied, the PL offset is not applied to these PUSCHs/PUCCHs.

### <<3-2>>

When the PL offset for the PRACH is supported/configured (that is, when two TAs are supported for a single-DCI multi-TRP, or when the PRACH is triggered by the PDCCH order and the PRACH association indicator field is 1), the UE may transmit the PRACH to the UL reception point.

The UE may transmit the PRACH to the UL reception point and receive Message 2/Message 3 from the macro TRP (DL/UL TRP). The UE may transmit a PUSCH scheduled by a RAR UL grant and a Message 4 HARQ-ACK PUCCH to the macro TRP (DL/UL TRP) (that is, the PL offset is not applied). The indicated TCI is not applied to these PUSCHs/PUCCHs. Therefore, when 2-2 above is applied, the PL offset is not applied to these PUSCHs/PUCCHs.

As in the examples of FIGS. 12 to 14, the PL offset for the PRACH may be configured in the RRC TCI-State information element, the TCI-UL-State information element, or the PUSCH-PowerControl information element, or may be configured in the RRC PRACH configuration (PRACHconfig) information element.

### <PL Offset Indication by PDCCH Order>

The UE may receive a PDCCH order indicating PRACH transmission (for example, a PDCCH order indicating PRACH transmission to the UL reception point), and may determine, based on a field in the PDCCH order, whether to apply the PL offset value for the transmission power calculation of the PRACH. In the case of a PDCCH order PRACH, regarding a method of determining which PL offset value (the PL value/PL offset value when a PL-RS is not configured) is applied (or is not applied) to the PRACH, at least one of the following options may be applied.

In the present disclosure, the PL-RS may be a DL RS (for example, SSB/CSI-RS/TRS) for calculating pathloss. In the present disclosure, the PL offset value and the PL value may be interchangeable with each other. The DL/UL reception point and the DL/UL TRP may be interchangeable with each other.

### [Option 3-1]

In Option 3-1, a case where a Rel. 15 PDCCH order is used (a case where a Rel. 18 PDCCH order is not configured) will be described.

The UE may use the QCL source RS of the PDCCH order (that is, the QCL source of the PDCCH) as the PL-RS of the PRACH. The QCL source RS of the PDCCH order may be an SSB or a CSI-RS/TRS.

The UE may determine whether to transmit the PRACH to the DL/UL TRP or the UL TRP based on the QCL source RS of the PDCCH order.

When the PRACH is transmitted to the UL TRP (that is, when the QCL source RS of the PDCCH order is an SSB/CSI-RS/TCI state of the UL TRP or is associated with the PL offset value = 0), the UE may apply the PL offset value for the transmission power control of the PRACH.

When the PRACH is transmitted to the DL/UL TRP (that is, when the QCL source RS of the PDCCH order is an SSB/CSI-RS/TCI state of the DL/UL TRP or is associated with the PL offset value > 0), the UE does not need to apply the PL offset value for the transmission power control of the PRACH.

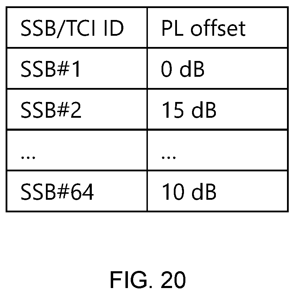

FIG. 20 is a diagram illustrating an example of the PL offset value of Option 3-1. As illustrated in FIG. 20, the PL offset value is defined for each of the SSB IDs/TCI state IDs. The UE may determine each PL offset value based on the configured SSB ID/TCI state ID. The PL value may be configured instead of each PL offset value.

As illustrated in FIG. 20, the PL offset value may be defined in the specifications for each of the SSB IDs/TCI state IDs, or may be configured/indicated in the UE. The UE may determine the PL offset value based on the definition/configuration/indication. The SSB ID may be interchangeable with a CSI-RS or a DL-RS. The TCI state ID may be a DL/joint TCI state.

### [Option 3-2]

When the Rel. 18 PDCCH order is used (the Rel. 18 PDCCH order is configured/triggered), a 1-bit indicator field of the PDCCH order may indicate either 3-2-1 or 3-2-2 below.

3-2-1: The PL-RS of the PRACH is the QCL source RS of the PDCCH order (that is, the QCL source of the PDCCH) (for example, indicated by bit:0). This means that the PRACH is transmitted to the DL/UL TRP, and the PL offset value is not applied for the transmission power control of the PRACH.

3-2-2: The PL-RS of the PRACH is an SSB indicated by the PDCCH order (for example, indicated by bit:1). This means that the PRACH is transmitted to the UL TRP, and the PL offset value corresponding to the PL-RS is applied for the transmission power control of the PRACH.

Variation: It is indicated by a specific bit (for example, bit:1) that the PL-RS of the PRACH is the QCL source RS of the PDCCH order (that is, the QCL source of the PDCCH). In addition, the bit means that the PRACH is transmitted to the UL TRP, and the PL offset value corresponding to the PL-RS may be applied for the transmission power control of the PRACH. That is, both bit:0 and bit:1 mean that the PL-RS of the PRACH is the QCL RS of the PDCCH order, and the difference between bit:0 and bit:1 may only lie in whether the PL offset value is applied.

A bit indicating whether the PL-RS of the PRACH is the QCL source RS of the PDCCH order or whether the PL-RS of the PRACH is the SSB indicated by the PDCCH order may be different from a bit indicating whether the PL offset value is applied for the transmission power control of the PRACH.

The UE may receive the configuration of the PL value or the PL offset value corresponding to the PL-RS via higher layer signaling/physical layer signaling, and may apply the PL value or the PL offset value corresponding to the PL-RS for the transmission power control of the PRACH.

According to the present embodiment, when the PDCCH order indicating the PRACH is received, the PL-RS used for the PRACH transmission power calculation can be appropriately determined.

### <Fourth Embodiment>

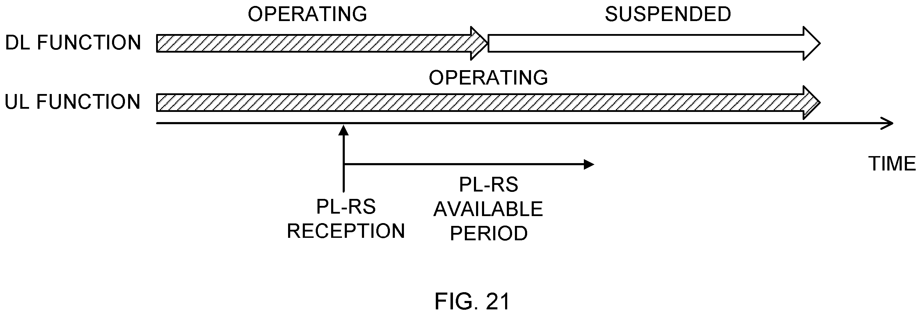

The UL reception point (UL TRP) may have both a DL transmission function and a UL reception function, and may temporarily stop (sleep) the DL transmission function in order to suppress energy (FIG. 21). In this case, the UL TRP may transmit the pathloss reference signal (PL-RS) to the UE while the DL transmission function is active. The UL TRP operates as the macro TRP (DL/UL TRP) while the DL function and the UL function are active.

When the PL-RS is received from the UL TRP, the UE may calculate the transmission power of a UL signal using the PL-RS, and may transmit the UL signal to the UL TRP.

When the PL-RS cannot be received from the UL TRP (when the DL transmission function is stopped), the UE may calculate the transmission power of a UL signal for the UL TRP using the PL-RS received from the macro TRP (DL/UL TRP) and the configured (received) PL offset, and may transmit the UL signal to the UL TRP.

The UE may calculate the transmission power of a UL signal for a certain period after receiving the PL-RS from the UL TRP, by using the PL value based on the PL-RS (PL-RS available period). This period may be defined in the specifications, may be configured/indicated to the UE via higher layer signaling/physical layer signaling, or may be reported as the UE capability information.

When the PL-RS corresponding to the TRP/TCI state of the transmission destination cannot be received after the lapse of a certain period from the PL-RS reception, the UE may calculate the transmission power using the PL-RS and the PL offset value of the macro TRP. In this case, as the resources of the PL-RS, two resources including a resource for the PL-RS of the UL TRP and a resource for the PL-RS of the macro TRP need to be configured.

According to the present embodiment, the energy (power consumption) of the UL TRP having both the DL transmission function and the UL reception function can be suppressed. In addition, even when the DL transmission function is stopped, the transmission power can be appropriately calculated using the PL-RS and the PL offset value of the macro TRP.

### <Supplement>

### <<Notification of Information to UE>>

Notification of any information (from the network (NW)) (for example, the base station (BS)) to the UE (in other words, reception of any information from the BS by the UE) in the above-described embodiments may be performed using physical layer signaling (for example, DCI), higher layer signaling (for example, RRC signaling, a MAC CE), a certain signal/channel (for example, a PDCCH, a PDSCH, or a reference signal), or a combination thereof.

When the notification is performed by a MAC CE, the MAC CE may be identified by including, in a MAC subheader, a new logical channel ID (LCID) not defined in the existing standards.

When the notification is performed using DCI, the notification may be performed by a certain field of the DCI, a radio network temporary identifier (RNTI) used for scrambling of cyclic redundancy check (CRC) bits added to the DCI, a format of the DCI, or the like.

Furthermore, the notification of any information to the UE in the above-described embodiments may be performed periodically, semi-persistently, or aperiodically.

### <<Notification of Information from UE>>

Notification of any information from the UE (to the NW) (in other words, transmission/report of any information to the BS by the UE) in the above-described embodiments may be performed using physical layer signaling (for example, UCI), higher layer signaling (for example, RRC signaling, a MAC CE), a certain signal/channel (for example, a PUCCH, a PUSCH, a PRACH, or a reference signal), or a combination thereof.

When the notification is performed by a MAC CE, the MAC CE may be identified by including, in a MAC subheader, a new LCID not defined in the existing standards.

When the notification is performed by a UCI, the notification may be transmitted using a PUCCH or PUSCH.

Furthermore, the notification of any information from the UE in the above-described embodiments may be performed periodically, semi-persistently, or aperiodically.

### <<Application of Each Embodiment>>

In the UE/BS, the specific (one or a plurality of) processing/operation/control/assumption/information for at least one of the above-described embodiments may be applied (may be used) when any one of the following conditions or a combination thereof is satisfied:
· A higher layer parameter indicating the above-described specific processing/operation/control/assumption/information is configured;
· The above-described specific processing/operation/control/assumption/information is determined based on a related higher layer parameter;
· The above-described specific processing/operation/control/assumption/information is specified/activated/triggered by a MAC CE/DCI/UCI/resource/channel/RS;
· A specific UE capability indicating (or related to) the above-described specific processing/operation/control/assumption/information is reported or supported; and
· The application of the above-described specific processing/operation/control/assumption/information is determined based on the specific condition.

The above-described specific UE capability may indicate at least one of the following:
· Support for the above-described specific processing/operation/control/assumption/information;
· Support for a single-DCI multi-TRP scenario;
· Support for Scenario 1 (UL dense deployment);
· Support for Scenario 2 (HetNet);
· Support for a UL transmission (SRS/PUSCH/PUCCH/PRACH) to a UL reception point; and
· The number of UL reception points/DL transmission points to be supported.

Furthermore, the specific UE capability may be capability applied over all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each feature set (FS) or feature set per component-carrier (FSPC).

In addition, the specific UE capability may be capability applied across all the duplex schemes (in common irrespective of duplex scheme) or may be capability for each duplex scheme (for example, time division duplex (TDD) and frequency division duplex (FDD)).

When the above-described conditions are not satisfied, the UE/BS may follow the operation defined in a legacy 3GPP release.

### (Supplementary Notes)

Regarding the zeroth/first embodiment of the present disclosure, the following supplementary notes of the invention will be given.

### [Supplementary Note 1]

A terminal including:
a receiving section that receives a configuration of a first pathloss (PL) value corresponding to an uplink (UL) reception point, or a configuration of a PL offset value which is a difference between a second PL value corresponding to a downlink (DL) transmission point and the first PL value; and
a control section that calculates transmission power of a UL signal to be transmitted to the UL reception point based on the first PL value or the PL offset value.

### [Supplementary Note 2]

The terminal according to Supplementary Note 1, in which the receiving section receives information indicating the UL reception point as a parameter corresponding to a Transmission Configuration Indication (TCI) state of the UL reception point.

### [Supplementary Note 3]

The terminal according to Supplementary Note 1 or 2, in which
when the PL offset value is configured for each Transmission Configuration Indication (TCI) state, the control section determines that the TCI state is associated with the UL reception point.

### [Supplementary Note 4]

The terminal according to any one of Supplementary Notes 1 to 3, in which
when the PL offset value is not configured for each Transmission Configuration Indication (TCI) state, the control section determines that the TCI state is associated with the DL transmission point.

### (Supplementary Notes)

Regarding the second to fourth embodiments of the present disclosure, the following supplementary notes of the invention will be given.

### [Supplementary Note 1]

A terminal comprising:
a receiving section that receives, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point; and
a control section that calculates transmission power of a UL signal to be transmitted to the UL reception point based on the PL offset value.

### [Supplementary Note 2]

The terminal according to Supplementary Note 1, in which
the control section applies the PL offset value only to the UL reception point corresponding to a joint TCI state or a UL TCI state.

### [Supplementary Note 3]

The terminal according to Supplementary Note 1 or 2, in which
the control section calculates transmission power of a physical random access channel (PRACH) to be transmitted to the UL reception point based on the PL offset value.

### [Supplementary Note 4]

The terminal according to any one of Supplementary Notes 1 to 3, in which
the UL reception point has both a DL transmission function and a UL reception function,
the receiving section receives a PL reference signal from the UL reception point while the DL transmission function of the UL reception point is active, and
the control section calculates the transmission power of the UL signal using a PL value based on the PL reference signal.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

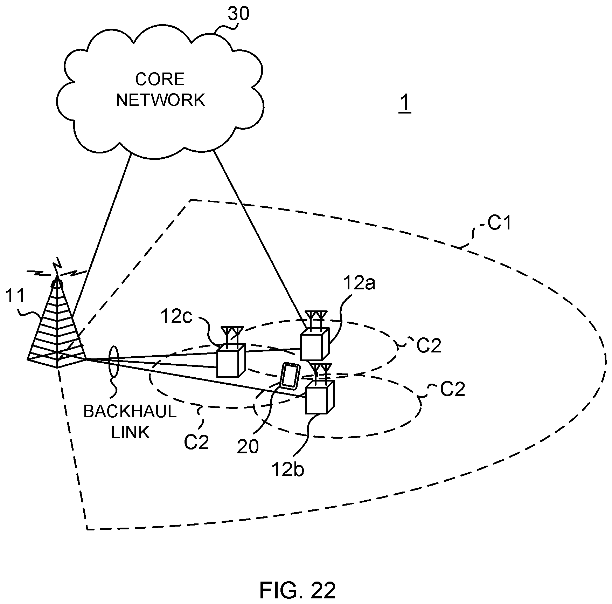

FIG. 22 is a diagram illustrating an example of a schematic configuration of the radio communication system according to one embodiment. A radio communication system 1 (simply referred to as a system 1) may be a system that implements communication using long term evolution (LTE), 5th generation mobile communication system New Radio (5G NR), and the like defined by third generation partnership project (3GPP).

Furthermore, the radio communication system 1 may support dual connectivity (multi-RAT dual connectivity (MR-DC)) between a plurality of radio access technologies (RATs). The MR-DC may include dual connectivity (E-UTRA-NR dual connectivity (EN-DC)) between LTE (evolved universal terrestrial radio access (E-UTRA)) and NR, dual connectivity (NR-E-UTRA dual connectivity (NE-DC)) between NR and LTE, and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, shape, size, and the like of cells and the user terminals 20 are not limited to the aspects illustrated in the drawings. Hereinafter, the base stations 11 and 12 will be collectively referred to as "base station 10" when the base stations 11 and 12 are not distinguished from each other.

Note that the radio communication system 1 may use Multi Input Multi Output (MIMO). For example, one cell may be formed by one antenna/base station 10 or may be formed by a plurality of antennas/base stations 10. One [virtual] cell (for example, which may be referred to as a super cell) may be configured with a plurality of [virtual] cells (for example, which may be referred to as sub-cells). The super cell may correspond to a cell having a fixed physical range, or the sub-cell may correspond to a cell having a semi-statically/dynamically variable physical range. In this case, the radio communication system 1 may be referred to as a cell-free system.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Furthermore, the user terminal 20 may perform communication on each CC using at least one of time division duplex (TDD) and frequency division duplex (FDD).

The plurality of base stations 10 may be connected to each other in a wired manner (for example, an optical fiber, an X2/Xn interface, or the like in compliance with common public radio interface (CPRI)) or in a wireless manner (for example, NR communication). For example, when the NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. Furthermore, communication with an external network (for example, the Internet) may be performed via the DN.

The user terminal 20 may be a terminal supporting at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be interchangeable with DL data, and the PUSCH may be interchangeable with UL data.

For detection of the PDCCH, a control resource set (CORESET) and a search space may be used. The CORESET corresponds to a resource for searching DCI. The search space corresponds to a search area and a search method for PDCCH candidates. One CORESET may be associated with one or a plurality of search spaces. The UE may monitor CORESET associated with a certain search space based on a search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

Note that in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRSs may be referred to as "user terminalspecific reference signals (UE-specific reference signals)".

### (Base Station)

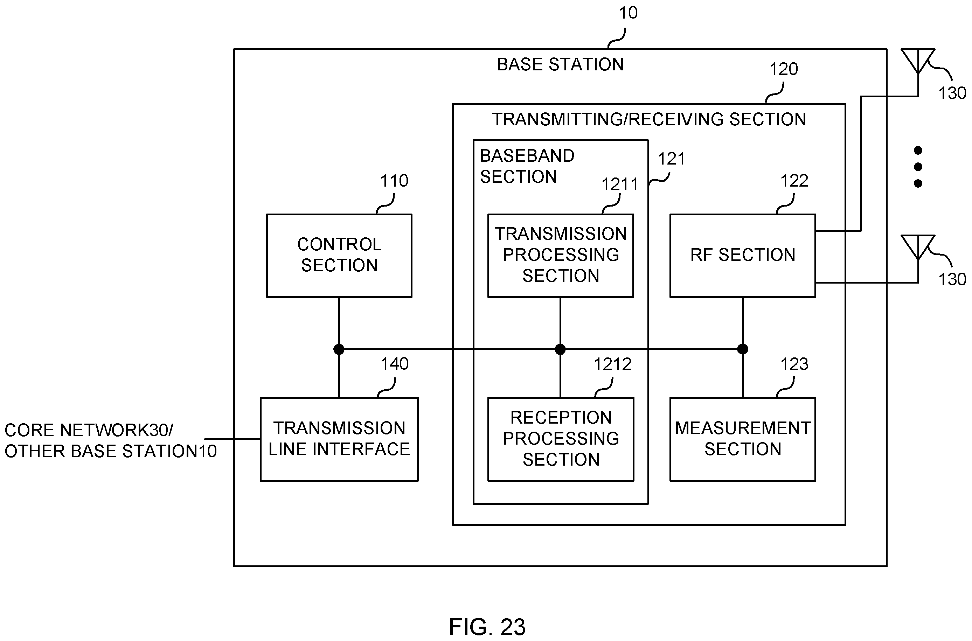

FIG. 23 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that the present example mainly describes functional blocks of a characteristic part of the present embodiment, and it may be assumed that the base station 10 also has another functional block necessary for radio communication. A part of the processing of each section described below may be omitted.

The control section 110 controls the entire base station 10. The control section 110 can include a controller, a control circuit, or the like, which is described based on common recognition in the technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmitting/receiving circuit, and the like, which are described based on common recognition in the technical field according to the present disclosure.

The transmitting/receiving section 120 may be configured as an integrated transmitting/receiving section, or may be configured with a transmitting section and a receiving section. The transmitting section may include the transmission processing section 1211 and a RF section 122. The receiving section may include the reception processing section 1212, the RF section 122, and the measurement section 123.

The transmitting/receiving antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam using digital beamforming (for example, precoding), analog beamforming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

On the other hand, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, and PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus (for example, a network node providing the NF) included in the core network 30, another base station 10, and the like, and may, for example, acquire or transmit user data (user plane data), control plane data, and the like for the user terminal 20.

Note that the transmitting section and the receiving section of the base station 10 in the present disclosure may include at least one of the transmitting/receiving section 120, the transmitting/receiving antenna 130, and the transmission line interface 140.

Note that the base station 10 may be separated into three elements including a radio unit (RU), a distributed unit (DU), and a central unit (CU). For example, the RU may implement RF processing (digital beamforming, digitalto-analog conversion, analog beamforming, and the like) and lower functions of a physical layer (precoding, IFFT, FFT, and the like). The DU may implement higher functions of a physical layer (encoding, resource element mapping, and the like), functions of a MAC layer, and functions of an RLC layer. The CU may implement functions of a PDCP layer, a Service Data Adaptation Protocol (SDAP) layer, and a RRC layer.

In the present disclosure, the base station 10 may include one device that implements all the functions of the RU, the DU, and the CU, and may include a plurality of devices that respectively implement some of the functions of the RU, the DU, and the CU and are connected to each other. In the present disclosure, the base station 10 may be interchangeable with the RU/DU/CU.

The transmitting/receiving section 120 may transmit a configuration of a first pathloss (PL) value corresponding to an uplink (UL) reception point, or a configuration of a PL offset value which is a difference between a second PL value corresponding to a downlink (DL) transmission point and the first PL value.

The control section 110 may assume that transmission power of a UL signal to be transmitted to the UL reception point is calculated based on the first PL value or the PL offset value. When the base station 10 is the UL reception point, the UL signal may be received.

The transmitting/receiving section 120 may transmit, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point.

The control section 110 may assume that transmission power of a UL signal to be transmitted to the UL reception point is calculated based on the PL offset value. When the base station 10 is the UL reception point, the UL signal may be received.

In the present disclosure, the base station 10 may be the UL reception point or the DL transmission point, or may be another transmission/reception point.

### (User Terminal)

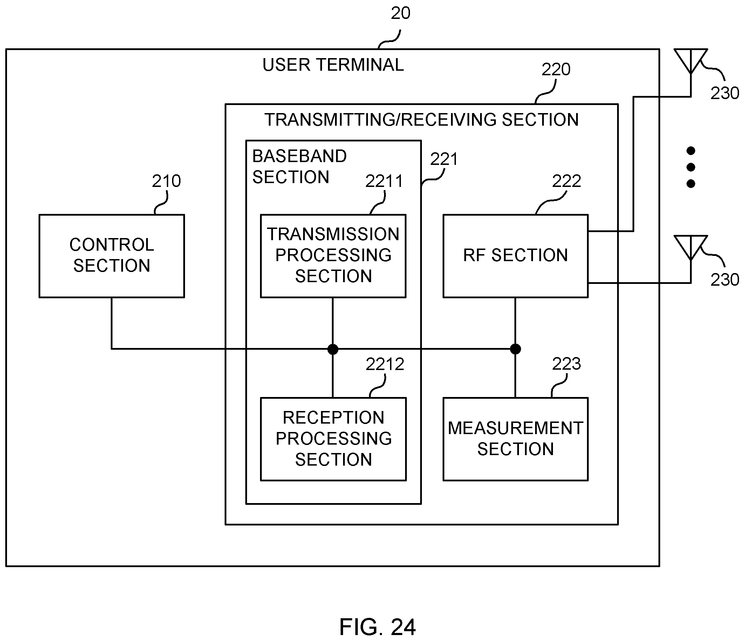

FIG. 24 is a diagram illustrating an example of a configuration of the user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that the present example mainly describes functional blocks of a characteristic part of the present embodiment, and it may be assumed that the user terminal 20 includes other functional blocks that are necessary for radio communication as well. A part of the processing of each section described below may be omitted.

The control section 210 controls the entire user terminal 20. The control section 210 can include a controller, a control circuit, and the like that are described based on common recognition in the technical field according to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like, which are described based on common recognition in the technical field according to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described based on common recognition in the technical field according to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam using digital beamforming (for example, precoding), analog beamforming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. When transform precoding is enabled for a certain channel (for example, PUSCH), the transmitting/receiving section 220 (transmission processing section 2211) may perform DFT processing as the transmission processing in order to transmit the channel using a DFT-s-OFDM waveform. Otherwise, DFT processing does not need to be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

On the other hand, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the measurement section 223 may derive channel measurement for CSI computation, based on a channel measurement resource. The channel measurement resource may be, for example, a non-zero power (NZP) CSI-RS resource. Furthermore, the measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchangeable with a zero power (ZP) CSI-RS. Note that, in the present disclosure, CSI-RS, NZP CSI-RS, ZP CSI-RS, CSI-IM, CSI-SSB, and the like may be interchangeable with each other.

Note that the transmitting section and the receiving section of the user terminal 20 in the present disclosure may include at least one of the transmitting/receiving section 220 and the transmitting/receiving antenna 230.

The transmitting/receiving section 220 may receive a configuration of a first pathloss (PL) value corresponding to an uplink (UL) reception point, or a configuration of a PL offset value which is a difference between a second PL value corresponding to a downlink (DL) transmission point and the first PL value.

The control section 210 may calculate transmission power of a UL signal to be transmitted to the UL reception point based on the first PL value or the PL offset value.

The transmitting/receiving section 220 may receive information indicating the UL reception point as a parameter corresponding to a Transmission Configuration Indication (TCI) state of the UL reception point.

When the PL offset value is configured for each Transmission Configuration Indication (TCI) state, the control section 210 may determine that the TCI state is associated with the UL reception point.

When the PL offset value is not configured for each Transmission Configuration Indication (TCI) state, the control section 210 may determine that the TCI state is associated with the DL transmission point.

The transmitting/receiving section 220 may receive, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point.

The control section 210 may calculate transmission power of a UL signal to be transmitted to the UL reception point based on the PL offset value.

The control section 210 may apply the PL offset value only to the UL reception point corresponding to a joint TCI state or a UL TCI state.

The control section 210 may calculate transmission power of a physical random access channel (PRACH) to be transmitted to the UL reception point based on the PL offset value.

The UL reception point may have both a DL transmission function and a UL reception function. In this case, the transmitting/receiving section 220 may receive a PL reference signal from the UL reception point while the DL transmission function of the UL reception point is active. The control section 210 may calculate the transmission power of the UL signal using a PL value based on the PL reference signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

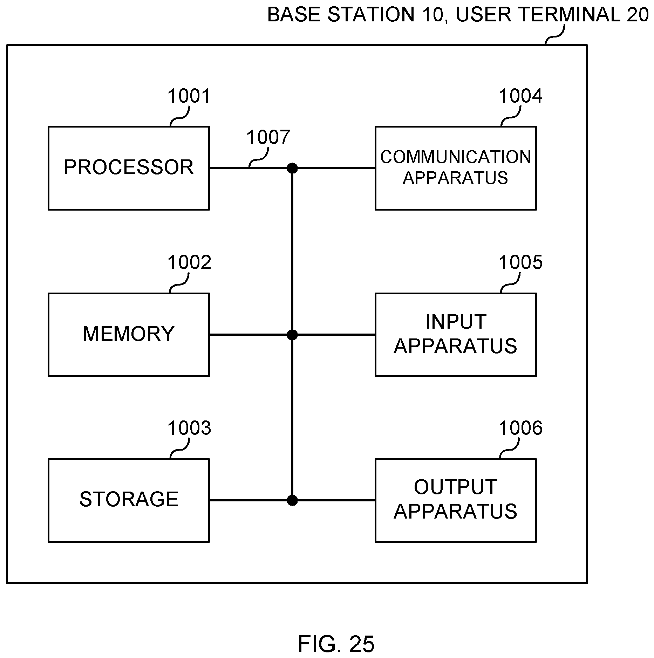

For example, a base station, a user terminal, and so on according to one embodiment of the present disclosure may function as a computer that executes the processes of the radio communication method of the present disclosure. FIG. 25 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

It should be noted that an apparatus (e.g., a network node providing NF) included in the core network 30 may also be realized by the functional blocks/hardware structure described above.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channelencoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

For any information (e.g., variables, constants, parameters) described in the present disclosure, even if not explicitly stated in the above embodiments, information indicating/identifying [a value of] such information (or information related to such information) may be notified from any first device (e.g., UE/base station) to any second device (e.g., base station/UE).

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

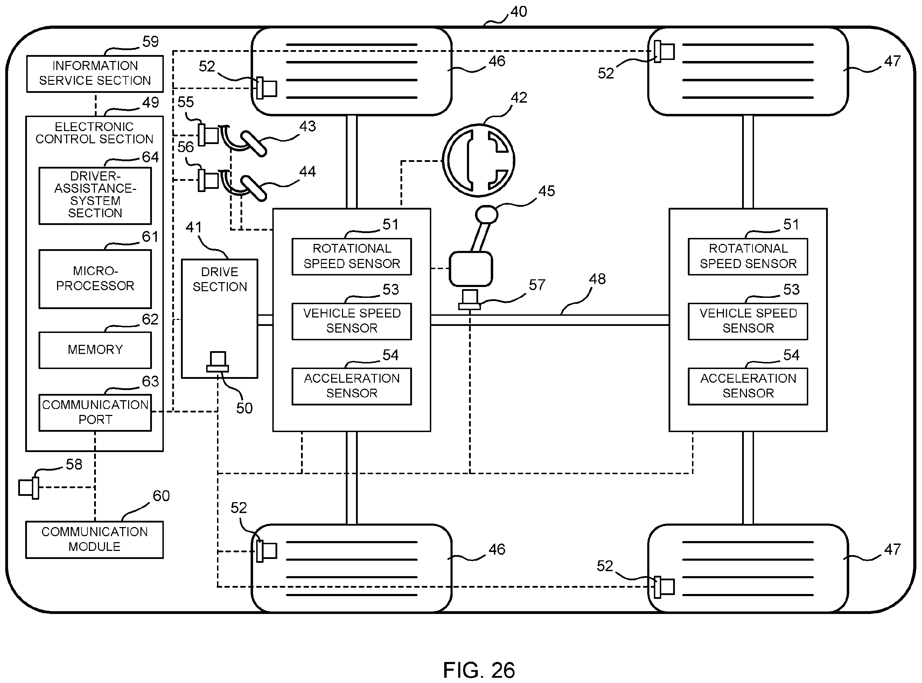

FIG. 26 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...", "..." (if "..." above is a to-infinitive, this "..." is a verb without "to"), or the like. "Does not expect..." may be used interchangeably with "be not expected...", "does not..." (if "..." above is a to-infinitive, this "..." is a verb without "to"), or the like. Furthermore, "an apparatus A is not expected..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point; and
a control section that calculates transmission power of a UL signal to be transmitted to the UL reception point based on the PL offset value.

2. The terminal according to claim 1, wherein
the control section applies the PL offset value only to the UL reception point corresponding to a joint TCI state or a UL TCI state.

3. The terminal according to claim 1, wherein
the control section calculates transmission power of a physical random access channel (PRACH) to be transmitted to the UL reception point based on the PL offset value.

4. The terminal according to claim 1, wherein
the UL reception point has both a DL transmission function and a UL reception function,
the receiving section receives a PL reference signal from the UL reception point while the DL transmission function of the UL reception point is active, and
the control section calculates transmission power of the UL signal using a PL value based on the PL reference signal.

5. A radio communication method of a terminal comprising:
receiving, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point; and
calculating transmission power of a UL signal to be transmitted to the UL reception point based on the PL offset value.

6. A base station comprising:
a transmitting section that transmits, for each TCI state, for each set of TCI states, or for all TCI states, a configuration of a PL offset value which is a difference between a first pathloss (PL) value corresponding to an uplink (UL) reception point and a second PL value corresponding to a downlink (DL) transmission point; and
a control section that assumes that transmission power of a UL signal to be transmitted to the UL reception point is calculated based on the PL offset value.
